# EUROPÄISCHE PATENTSCHRIFT

(11) **EP 1 581 587 B1**
(45) Veröffentlichungstag und Bekanntmachung des Hinweises auf die Patenterteilung: **11.04.2007**
(21) Anmeldenummer: 04700683.8
(22) Anmeldetag: 08.01.2004
(51) Int. Cl.: C08K 9/04, C08K 9/06, C08K 3/34, C01B 33/44, C09K 21/14

(54) **MASTERBATCHE AUF DER BASIS PRE-EXFOLIERTER NANOCLAYS UND IHRE VERWENDUNG**
MASTER BATCHES BASED ON PRE-EXFOLIATED NANOCLAYS AND THE USE OF THE SAME
MELANGES-MAITRES A BASE DE NANOARGILES PRE-EXFOLIEES, ET LEUR UTILISATION

(30) Priorität: 08.01.2003 GB 0300374; 12.06.2003 DE 10326977
(43) Veröffentlichungstag der Anmeldung: 05.10.2005
(73) Patentinhaber: SÜD-CHEMIE AG, 80333 München (DE)
(72) Erfinder: METZEMACHER, Heinz-Dieter, 50737 Köln (DE); SEELING, Rainer, 50189 Elsdorf-Grouver (DE)
(74) Vertreter: Westendorp, Michael Oliver
(86) Internationale Anmeldenummer: PCT/EP2004/000071
(87) Internationale Veröffentlichungsnummer: WO 2004/063264

(56) Entgegenhaltungen:
- EP-A- 1 090 954
- WO-A-93/04118
- DE-A- 3 145 452
- DE-A- 19 921 472
- US-B1- 6 380 295
- ISHIDA H., CAMPBELL S., BLACKWELL J.: "General Approach to Nanocomposite Preparation" CHEM. MATER., Bd. 12, 2000, Seiten 1260-1267, XP002283069
- DATABASE CA [Online] CHEMICAL ABSTRACTS SERVICE, COLUMBUS, OHIO, US; 1997 LAUS, MICHELE ET AL: "New hybrid nanocomposites based on an organophilic clay and poly(styrene-b- butadiene ) copolymers" retrieved from STN Database accession no. 128:23868 XP002283070 & JOURNAL OF MATERIALS RESEARCH CODEN: JMREEE; ISSN: 0884-2914, Bd. 12, Nr. 11, 1997 - 3134, Seite 3139

## Beschreibung

Die Erfindung betrifft Zusammensetzungen, insbesondere Masterbatche auf der Basis von organisch interkaliertem Nanoclay, erfindungsgemäße Verwendungen dieser Zusammensetzugen/Masterbatche und ein Verfahren zu ihrer Herstellung.

Die Möglichkeit einer Eigenschaftsverbesserung von Kunststoffen oder allgemein polymeren Werkstoffen mittels Nanoclays als Füllstoffen ist schon länger bekannt. Als wesentliche Quelle dieser Nanoclays sind dabei wasserquellbare natürliche oder synthetische Schichtsilikate zu nennen. Bei der Quellung im Wasser lösen sich Schichtplättchen im Nano-Bereich ab, wodurch regelrechte Netzwerke entstehen. Polymere oder allgemein langkettige Ionen oder andere geladene Teilchen können in die Zwischenschichten eindringen, was als Interkalation bezeichnet wird.

Um die so interkalierten Nanoclays technisch einsetzen zu können, müssen sie unter Einsatz weiterer Quellmittel exfoliert werden. Bei dieser Exfolierung geht die ursprüngliche Nahordnung in den Schichtsilikaten verloren. Vollständig exfolierte Smectite, wie der Montmorillonit als Beispiel eines solchen Schichtsilikats, können Teilchengrößen mit einem sehr hohen Aspektverhältnis von bis zu 1000 ausbilden, erhalten durch Schichten mit ca. 1 nm Durchmesser, ca. 100 nm Weite und 500 - 1000 nm Länge.

Für die Zwecke dieser Anmeldung werden unter dem Begriff Nanoclay immer organisch interkalierte Schichtsilikate verstanden. Dies entspricht dem allgemeinen Verständnis auf diesem Gebiet. Solche Nanoclays sind kommerziell erhältlich. Unter der Bezeichnung "Nanofil" vertreibt die Südchemie AG einen Nanoclay auf Montmorillonitbasis. Als Beispiele sind "Nanofil 15" und" Nanofil 5" zu nennen, die mit Distearoyldimethyl-ammoniumchlorid organisch interkaliert sind. Ein als "EA 108" bezeichnetes Produkt der US-amerikanischen Firma Elementis Corp. basiert auf Hectorit.

Für die Verwendung dieser Nanoclays in der kunststoffverarbeitenden Industrie besteht das chemische Problem, daß die natürlichen oder synthetischen Schichtsilikate zunächst organophil gemacht werden müssen, damit sie mit den hydrophoben Kunststoffen verarbeitbar sind. Als ein wesentliches Verfahren für diese organophile Modifizierung der Schichtsilikate hat der Kationenaustausch Bedeutung erlangt. Der Kationenaustausch wird in der wäßrigen Phase mit kationischen Tensiden auf der Basis von Ammonium-, Phosphonium- oder Sulfonium-Tensiden durchgeführt. Als ein weiteres Verfahren ist auch die Säureaktivierung bekannt. Hierbei wird z. B. Salzsäure verwendet.

Nanoclays haben als Additive in halogenfreien Flammschutzmitteln Bedeutung erlangt. So wird in der DE-A-199 21 472 eine flammgeschützte Polymerzusammensetzung offenbart, die ein thermoplastisches oder vernetzbares Polymer, Magnesium,- Calcium-, Zink- und/oder Aluminiumhydroxid und/oder deren Doppelhydroxide als halogenfreien Füllstoff und zusätzlich ein organisch interkaliertes Schichtsilikat auf der Basis quellfähiger Smectite enthält.

Nanoclays werden bevorzugt als Additive in halogenfreien Flammenschutzmitteln eingesetzt, weil sie die Bildung einer stabilen Krustenschicht während der Verbrennung des Polymers fördern. Die Bildung einer solchen Krustenschicht verhindert das weitere Entzünden des Polymers, das Zusammenfallen oder Abtropfen des brennenden Polymers, wodurch die Ausbreitung des Feuers verstärkt werden könnte.

Bei den Nanoclay-Füllstoffen ist es zur Entfaltung ihrer Wirksamkeit erforderlich, sie in dem Polymer, in das sie eingebracht werden sollen, zu exfolieren. Es hat sich im Stand der Technik jedoch gezeigt, daß sich eine vollständige Exfolierung als problematisch darstellt. Die Anwesenheit von Quellmittel während der Compoundierung ist vor allem dann verfahrenstechnisch problematisch, wenn organische Lösungsmittel eingesetzt werden. Auch konventionelle Haftvermittler, wie funktionalisierte Silane, können herkömmlich nicht eingesetzt werden.

Die EP 1090 954 A beschreibt eine flammhemmende Polymerzusammensetzung, welche ein Polymer sowie ein organisch modifiziertes Tonmineral enthält. Das organisch modifizierte Tonmineral wird hergestellt, indem ein smektitischer Ton mit einem oder mehreren quaternären Ammoniumverbindungen und gegebenenfalls mit ein oder mehreren weiteren organischen Verbindungen umgesetzt wird.

Die US 6,380,295 B1 beschreibt eine Zusammensetzung, die ein oder mehrere smektitische Tone, ein oder mehrere quaternärer Ammoniumverbindungen sowie ein oder mehrere nicht-anionische Polymere enthält, die im smektitischen Tonmineral interkaliert sind.

Die DE 31 45 452 A beschreibt einen gelbildenden organophilen Ton, der durch Reaktion einer organisch kationischen Verbindung und eines organischen Anions mit einem smektitischen Ton erhalten wird. Als kationische Verbindung werden quaternäre Ammoniumverbindungen sowie analoge kationische Verbindungen des Phosphors verwendet. Die Reaktion wird derart durchgeführt, dass ein Komplex aus dem organischen Kation und dem organischen Anion in den smektitischen Ton eingelagert wird, wobei die kationischen Austauschstellen des smektitischen Tonminerals durch das organische Kation und die anionischen Austauschstellen durch das organische Anion besetzt werden.

H. Ishida, S. Campbell und J. Blackwell, Chem. Mater. 2000, 12, 1260 - 1267, beschreiben ein Verfahren zur Herstellung von Nanocompositen, wobei ein Monomer oder ein Polymer, welches in smektitischen Tonen interkalieren kann, in geringen Mengen zugesetzt wird, um den smektitischen Ton zu quellen.

M. Laus, O. Francescangeli und F. Sandrolini, Journal of Materials Research (1997), 12(11), 3134 -3139, beschreiben die Herstellung von Nanocompositen, welche ein Polymer (SBS) sowie einen organophilen Ton enthalten. Die Polymerketten des SBS können teilweise in den organophilen Ton eingelagert werden, wobei der Grad der Einlagerung durch ein Tempern bei 120 °C erhöht werden kann.

In der WO 93/04118 A wird ein Verfahren zur Herstellung von Nanocompositen aus einer Polymerschmelze und einem organophilen Tonmineral beschrieben. Zunächst wird eine fließfähige Mischung aus einer Polymerschmelze und einer quellbaren interkalierten Schichtverbindung hergestellt, deren Schichten mit dem Polymer kompatibel sind. Die interkalierte Verbindung kann zwischen jeder Schicht oder zwischen einzelnen Schichten der Schichtverbindung eingelagert sein und kann in Form eines Feststoffs, einer Flüssigkeit, eines Gases oder einer Lösung mit der Schichtverbindung umgesetzt worden sein.

Die DE 199 21 472 A1 beschreibt eine flammgeschützte Polymerzusammensetzung, welche hergestellt wird, indem in ein thermoplastisches oder vernetzbares Polymer Magnesium-, Calcium-, Zink- und/oder Aluminiumhydroxid oder deren Doppelhydroxide sowie ein organisch interkaliertes Schichtsilikat eingearbeitet wird.

Im fertigen Polymer zeigte sich bisher als ungünstig, daß bei dem Einsatz von Nanoclay-Füllstoffen die mechanischen Eigenschaften und die Extrudierfähigkeit von Polymerzusammensetzungen erheblich leiden. Die Nanoclay-Füllstoffe bereiten Schwierigkeiten während der Einarbeitung in die jeweilige Polymerzusammensetzung. Da sie nur schwer zu exfolieren sind, konnten sie bisher auch nur schwer gleichmäßig über die gesamte Polymerzusammensetzung verteilt werden. Dadurch und durch ihre bisher noch hohen Kosten blieb ihr Einsatzgebiet beschränkt. Zusätzliche Probleme entstehen im elektrischen Bereich. Insbesondere in Salzwasser führten Tauchversuche mit 300 V über mehrere Tage zum Ausfall des Polymers durch Lichtbogenbildung.

Davon ausgehend lag der vorliegenden Erfindung die Aufgabe zugrunde, Nanoclay-Füllstoffe so bereitzustellen, daß sie gleichmäßig in unterschiedlichen polymeren Werkstoffen zu verteilen sind, deren Eigenschaften, insbesondere im Hinblick auf die Präexfolierung bzw. die vollständige Delaminierung/Exfolierung nach Einarbeitung in das gewünschte Polymer, verbessern und den Einsatz von Nanoclay-Füllstoffen neuen Anwendungsgebieten zuzuführen, unter Reduzierung der für ihre Verwendung aufzubringenden Kosten und damit Erhöhung ihrer Wirtschaftlichkeit.

Gelöst wird diese Aufgabe durch einen pulverförmigen Masterbatch gemäß Anspruch 1 , der ein Nanoclay aus einem quellfähigen anorganischen Schichtmaterial aufweist, das in einem trockenen Verfahren mit einem pre-exfolierenden Additiv oder einer Additivmischung oberflächenbeschichtet worden ist.

Der Begriff Masterbatch ist in der Chemie an sich bekannt und bezeichnet eine Vormischung, die zunächst angefertigt und dann in einem Produktionsprozeß oder Verfahrensablauf eingesetzt wird. Im Rahmen der vorliegenden Erfindung hat es sich gezeigt, daß im Stand der Technik bekannte Nachteile vermieden werden können, wenn zunächst der pulverförmige Masterbatch hergestellt und als eine vorbereitete Einheit in einem Polymer oder einer Polymerzusammensetzung, was auch ein Kunststoff sein kann, als Füllstoff zur Modifizierung der Eigenschaften eingesetzt wird.

Das im Masterbatch enthaltene Nanoclay weist eine mittlere Teilchengröße von 0,1 bis 1000 µm, bevorzugt von 0,1 bis 100 µm, besonders bevorzugt von 1 bis 15 µm und ganz besonders bevorzugt von 2 bis 10 µm auf.

Das Nanoclay kann gemahlenes Nanoclay enthalten oder vollständig gemahlen sein. Das Mahlen als solches ist ein bekannter Verarbeitungsprozeß, der einen hohen Durchsatz ermöglicht und damit hohe Ausbeuten an gemahlenem Nanoclay zur Verfügung stellt. An das Mahlen selbst sind keine besonderen Anforderungen zu stellen. Es kann mittels Jet-Mühle, Kugelmühle, insbesondere aber durch eine Schwingmühle, Walzenmühle, Schlagmühle, Schlagprallmühle, Reibmühle oder Stiftmühle erfolgen.

Gemahlenes Nanoclay, bei dem die mittlere Teilchengröße unter die Teilchengröße der im Handel erhältlichen Nanoclays gesenkt wird, ist insbesondere dann von großem Vorteil, wenn dadurch ein Masterbatch hergestellt wird, der zusammen mit halogenfreien Füllstoffen in Polymerzusammensetzungen für die Verwendung als Flammschutzmittel dient. Obwohl die Nanoclays dann auf eine mittlere Teilchengröße reduziert worden sind, von der an sich angenommen werden muß, daß sie keine gewünschte Wirkung mehr erzielen, läßt sich erstaunlicherweise bei Einsatz eines solchen Masterbatches dennoch feststellen, daß die mechanischen sowohl als auch die Verarbeitungseigenschaften der Polymerzusammensetzung deutlich verbessert werden.

Diese Verbesserung der mechanischen und der Verarbeitungseigenschaften ermöglicht eine höhere Beladung der Polymerzusammensetzung mit flammhemmendem, vorzugsweise halogenfreiem Füllstoff bei gleichbleibenden mechanischen Eigenschaften und gleichbleibender Verarbeitungsqualität.

Auf der anderen Seite kann aber auch eine geringere Beladung mit dem flammhemmenden Füllstoff bevorzugt werden, um dadurch die mechanischen Eigenschaften und die Verarbeitungsqualität noch zu verbessern, ohne gleichzeitig eine Verschlechterung der flammhemmenden Eigenschaften der Polymerzusammensetzungen zu bewirken. Auf die erfindungsgemäße Verwendung des pulverFörmigen Masterbatches für die flammhemmende Ausrüstung von Polymeren bzw. Polymerzusammensetzungen wird weiter unten noch eingegangen.

Vorzugsweise ist das anorganische Schichtmaterial ausgewählt aus natürlichen oder synthetischen Schichtsilikaten. Als solche Schichtsilikate sind insbesondere die Smectite, zu denen der Montmorillonit, Hektorit, Saponit und Beidellit gehören, zu nennen. Auch Bentonit kann eingesetzt werden.

In der erfindungsgemäßen Zusammensetzung bzw. Masterbatch kann zusätzlich zumindest ein Additiv enthalten sein, das ausgewählt ist aus der Gruppe der gesättigten und ungesättigten Fettsäuren und ihrer Salze, der Fettsäurederivate, der Polymerfettsäuren, der Siloxanderivate, oder deren Mischungen.

Die insgesamt hier genannten Additive bzw. Additivmischungen dienen der Verbesserung der Exfolierung des Nanoclays, wobei die genannten Fettsäuren und Fettsäurederivate den besonderen Vorteil haben, daß sie die beste chemische Verträglichkeit zu den üblicherweise verwendeten Interkalierungsmitteln aufweisen und dennoch kostengünstig sind.

Es hat sich überraschend gezeigt, dass die besten Produkteigenschaften erzielt werden ,wenn bei der Herstellung der erfindungsgemäßen Zusammensetzung/ der Masterbatch von einem trockenen, pulverförmigen Nanoclay ausgegangen wird, der dann in einem trockenen Verfahren mit dem pre-exfolierenden Additiv oder der Additivmischung modifiziert wird. Dabei wird der Nanoclay mit dem trockenem Additiv bzw. der Additivmischung gecoatet, wobei herkömmliche Trockenmischer, insbesondere solche mit hoher Drehgeschwindigkeit verwendet werden können. Trocken soll hier im Gegensatz zu einer nicht pulverigen bzw. pastösen (extrudierbaren) Masse, einer Slurry oder einer Suspension angesehen werden. Vorzugsweise ist die erfindungsgemäße Modifikation des Nanoclays somit eine Oberflächenmodifikation bzw. ein Oberflächencoating.

Ein besonderer Vorteil dier erfindungsgemäßen Additive bzw. Additivmischungen ergibt sich in Kombination mit gemahlenem Nanoclay, da dieses als feinverteiltes Pulver einen feinen Staub bilden kann und so eine potentielle Gefahrenquelle für Explosionen darstellt. Mit dem Einsatz eines der genannten Additive oder einer beliebigen Mischung der genannten Additive kann dieses Problem deutlich reduziert oder aufgehoben werden.

Bevorzugt sind die Fettsäuren oder Fettsäurederivate, die ausgewählt sind aus Fettsäuren mit 10 bis 13 Kohlenstoffatomen. Hier sind insbesondere Laurinsäure, Palmitinsäure, Stearinsäure, Oleinsäure, Linolsäure, Capronsäure und Rizinusöl zu nennen.
Die Fettsäuren, insbesondere die genannten Vertreter dieser Gruppe, haben den Vorteil, daß sie leicht in großen Mengen erhältlich und dabei kostengünstig sind und auf der anderen Seite einen sicheren Umgang im industriellen Großmaßstab erlauben.

Die Fettsäurederivate umfassen hydrogenierte Derivate, Alkoholderivate, Aminderivate oder deren Mischungen.

Sie können außerdem ausgewählt sein aus der Gruppe der polymeren Fettsäuren, der Ketofettsäuren, der Fettsäurealkyloxazoline und Fettsäurealkylbisoxazoline, oder deren Mischungen.

Bei den ungesättigten Fettsäuren sind insbesondere die mono- oder polyungesättigten Hydroxyfettsäuren zu nennen.

Wenn als Additiv ein Siloxanderivat eingesetzt wird, ist dies vorzugsweise ein oligomeres oder polymeres Siloxan bzw. Siloxanderivat, insbesondere ein Oligoalkylsiloxan, Polydialkylsiloxan, Polyalkylarylsiloxan, Polydiarylsiloxan, oder eine Mischung davon, wobei die genannten Siloxanderivate besonders bevorzugt mit zumindest einer reaktiven Gruppe funktionalisiert worden sind.

Alternativ zu den genannten Additiven können auch solche ausgewählt aus der Gruppe der Ethylen-Propylen-Copolymere (EPM), der Ethylen-Propylen-Terpolymere (EPDM), der thermoplastischen Elastomere, der Haftvermittler, der Vernetzungsmittel oder deren Mischungen enthalten sein.
Als ein zu verwendender Haftvermittler sind die funktionalisierten Silane zu nennen.
EPM und/oder EPDM weisen bevorzugt ein mittleres Molekulargewicht von weniger als 20.000 auf. Das Verhältnis von Ethylen zu Propylen in EPM und/oder EPDM kann von 40 : 60 bis 60 : 40 betragen.

Der pulverförmige Masterbatch in Form der im wesentlichen homogenen Mischung des pre-exfolierten Nanoclays in einer seiner erfindungsgemäßen Ausgestaltungen kann mit einem Polymerpulver im wesentlichen homogen vermischt sein. Das Polymerpulver soll vor allen Dingen das Zusammenbacken des Pulver-Masterbatches verhindern, wenn dieser z. B. bei erhöhter Temperatur gelagert wird. Es trägt maßgeblich zur Verbesserung der Rieselfähigkeit des fertigen Pulver-Masterbatches bei. Ein geeignetes Auswahlkriterium für das jeweils zu verwendende Polymerpulver ist im wesentlichen die Kompatibilität mit dem weiteren Einsatzzweck des Pulver-Masterbatches. Beispielhaft Erwähnung, finden sollen geeignete Polymerpulver, wie Polyethylen-Ethylenvinylacetat-Copolymere (EVA), Ethylenethylacrylat-Copolymere (EEA), Ethylenmethylacrylat-Copolymere (EMA), Ethylenbutylacrylat-Copolymere (EBA), deren mit Maleinsäureanhydrid (MAH) modifizierte Derivate, Ionomere, Styrol-Elastomer-Systeme, Ether-Ester-Blockcopolymere, Polyether-Polyamid-Block-Copolymere (PEBA), Mischungen von thermoplastischen Polymeren, thermoplastische Polyurethanelastomere, thermoplastischer Siliconkautschuk oder Mischungen der genannten Polymere. Als solche Mischungen sind z. B. EVA/SAN, EVA/PA11, EVA/PS, und auch PVDF/EVA zu nennen. Letzteres ist als ALCRYN von DuPont im Handel erhältlich.

Die erfindungsgemäße Aufgabe wird ebenfalls gelöst durch einen Polymer-Masterbatch der durch Compoundierung des pulverförmigen Masterbatches in einer seiner erfindungsgemäßen Ausgestaltungen zusammen mit einem vorherbestimmten Trägerpolymer erhalten worden ist.

Hierfür geeignete Trägerpolymere umfassen Polyethylen-Ethylenvinylacetat-Copolymere (EVA), Ethylenethylacrylat-Copolymere (EEA), Ethylenmethylacrylat-Copolymere (EMA), Ethylenbutylacrylat-Copolymere (EBA), deren mit Maleinsäureanhydrid (MAH) modifizierte Derivate, Ionomere, Styrol-Elastomer-Systeme, Ether-Ester-Blockcopolymere, Polyether-Polyamid-Block-Copolymere (PEBA), Mischungen von thermoplastischen Polymeren, thermoplastische Polyurethanelastomere, thermoplastischen Siliconkautschuk oder Mischungen der genannten Polymere. Als solche Mischungen sind z. B. EVA/SAN, EVA/PA11, EVA/PS, und auch PVDF/EVA zu nennen. Letzteres ist als ALCRYN von DuPont im Handel erhältlich.

Vorteilhaft und in Hinblick auf die technische Anwendung vereinfachend ist die Tatsache, daß sich als Polymerpulver zur Bildung der im wesentlichen homogenen Mischung mit dem Pulver-Masterbatch und als Trägerpolymer zur Bildung des Polymer-Masterbatches im wesentlichen die gleichen Ausgangsmaterialien eignen. Neben einem einfacheren technischen Handling werden dadurch auch Kompatibilitätsprobleme vermieden.

Der Anteil des Trägerpolymers in dem Polymer-Masterbach beträgt 10 - 90 Gew.%, vorzugsweise 40 - 70 Gew.%. Für die Anwendung des Polymer-Masterbaches hat es sich als vorteilhaft erwiesen, wenn dieser in Granulatform vorliegt.

Die erfindungsgemäßen Pulver-Masterbatche oder Polymer-Masterbatche, gegebenenfalls in einer der genannten Abwandlungen, können einer Vielzahl von Anwendungen als Nano-Füllstoff in Polymeren, Polymerzusammensetzungen oder allgemein Kunststoffen zugeführt werden. Dazu gehört auch, daß sie zusätzlich in bereits bekannten Füllstoffsystemen eingesetzt werden, um den Gehalt an bisher üblichem Füllstoff zu reduzieren und in der Regel das Eigenschaftsprofil der so hergestellten Polymere oder Polymerzusammensetzungen zu verbessern.

Ein wichtiges Gebiet ist in diesem Fall der Einsatz in halogenfreien Flammschutzmitteln. Als halogenfreie Füllstoffe kommen in den Flammschutzmitteln im wesentlichen Aluminiumhydroxid, Aluminiumoxihydrat (Böhmit), Magnesiumhydroxid, Magnesiumoxid, Brucit, Magnesiumcarbonat, Hydromagnesit, Huntit, Bauxit, Calciumcarbonat, Talk, Glaspulver, Melaminisocyanurate, deren Derivate und Zubereitungen, Borate, Stannate und Hydroxystannate, Phosphate oder beliebige Mischungen davon zum Einsatz. Um eine Kompatibilität zwischen dem eingesetzten halogenfreien Füllstoff und dem Polymer oder der Polymerzusammensetzung zu gewährleisten, in das diese Füllstoffe eingearbeitet werden sollen, um das halogenfreie Flammschutzmittel zu ergeben, war es bisher im Stand der Technik erforderlich, daß die halogenfreien Füllstoffe, hier sind insbesondere Aluminium- und Magnesiumhydroxide zu nennen, oberffächenmodifiziert wurden. Nur so konnte ein gewünschtes Maß an mechanischen und/oder elektrischen Eigenschaften ermöglicht werden. Werden nun die genannten halogenfreien Füllstoffe zusammen mit dem erfindungsgemäßen Masterbatch eingesetzt, hat sich überraschend und in vorteilhafter Weise gezeigt, daß die Notwendigkeit der bisher üblichen Oberflächenmodifizierung der halogenfreien Füllstoffe entfällt.

Zu den genannten halogenfreien Füllstoffen ist noch zu ergänzen, daß hier besonders Aluminiumhydroxid (als ATH bezeichnetes Aluminiumtrihydrat der allgemeinen Formel Al₂O₃ x 3H₂O) und Magnesiumhydroxid in ihren verschiedenen Formen eingesetzt werden, wobei für beide Gruppen nicht nur ihre Wirksamkeit in Flammschutzmitteln, sondern auch ihre besondere Wirksamkeit im Bereich der Verminderung der Rauchentwicklung und ihr Einsatz in halogenierten, insbesondere bromierten und chlorierten Polymeren, unter anderem auch in PVC, zu nennen ist. Durch den Einsatz in Kombination mit dem erfindungsgemäßen Pulver- oder Polymer-Masterbatch kann der Anteil an halogenfreiem Füllstoff vermindert werden, ohne das Eigenschaftsprofil negativ zu beeinflussen.

Bei den Magnesiumhydroxiden ist sowohl die synthetische Form als auch der natürlich vorkommende Brucit gleichermaßen einsetzbar. Diese Füllstoffe werden bevorzugt auf mittlere Teilchengrößen von 1-12 µm, vorzugsweise auf 2 - 8 µm gemahlen. Bei Anwendungen der Füllstoffe in Kombination mit dem erfindungsgemäßen Masterbatch, bei welchem die Verarbeitungstemperatur oberhalb von 180°C liegt oder die Gebrauchstemperatur der fertigen Polymere oder Kunststoffe für einen längeren Zeitpunkt oberhalb von 150°C liegt, werden besonders gute Ergebnisse erzielt, wenn die mittlere Teilchengröße der Füllstoffe bei 2 - 8 µm liegt.

Zu einer ganz besonders erstaunlichen Anwendung gelangt der erfindungsgemäße Masterbatch sowohl in seiner Form als Pulver-Masterbatch, wie auch als Polymermasterbatch als Füllstoff in Polyolefinen als solchen sowie deren Mischungen (,,Legierungen", auch als ,,Alloys" bezeichnet), technischen Kunststoffen, wie Polyamid und Polyesthern sowie deren Mischungen, Polystyrolen, Duroplasten, wie ungesättigte Polyesther (UP)- und Epoxidharzsysteme.

Es hat sich gezeigt, daß die Pulver- oder Polymer-Masterbatche, als Füllstoffe in diesen Polyolefinsystemen eingesetzt, die ideale, d. h. exfolierte Verteilung und Dispersion in der Polymermatrix erreichen, was bisher bei den unpolaren Polymeren als unmöglich galt. Bisher gab es erhebliche Probleme, eine gleichmäßige Verteilung schon von sehr geringen Anteilen von z. B. 0,1 - 15 Gew.% von herkömmlich erhältlichen Nanoclays in einer solchen Polymermatrix zu erreichen, was zu einer erheblichen Verschlechterung der mechanischen Eigenschaften führte und außerdem zu einem unberechenbaren, schwankenden Verhalten in Brennbarkeitstest.

Alles zusammen genommen zeigte sich ein besonderer Vorteil der erfindungsgemäßen Pulver- wie Polymer-Masterbatche darin, daß sie als Kompadbilisatoren und ebenso als Krustenbildner und somit ebenso als wirksame Bestandteile von Flammschutzmitteln eingesetzt werden können. Die Polymerzusammensetzung kann zusätzlich Stabilisatoren, die dem Fachmann als solche bekannt sind, enthalten.

Ein weiteres breites Anwendungsfeld der Pulver- oder Polymer-Masterbatche ist in ihrem Einsatz als Füllstoff in Elastomeren und Duroplasten zu sehen.

Ganz allgemein lassen sich die Vorteile der Pulver- oder Polymer-Masterbatche bei ihrem Einsatz in den vielfältig genannten Polymersystemen so zusammenfassen, daß durch Einsatz der Pulver- oder Polymer-Masterbatche verbesserte Oberflächeneigenschaften der Polymerzusammensetzung, wie Oberflächenglätte oder Gleichmäßigkeit ein fehlendes fettiges Aussehen an der Oberfläche und ausgezeichnete Bedruck- und Kopierfähigkeit erreicht werden. Daneben ist die Abriebfestigkeit verbessert und die Durchlässigkeitseigenschaften sowie die Friktionseigenschaften werden günstig beeinflußt. Als besonders vorteilhaft für die industrielle Verwertung ist auch die fehlende Durchlässigkeit für verschiedene gasförmige Substanzen zu nennen. Durch eine erhöhte Plastizität und Formbarkeit kann die Verarbeitungsqualität z. B. im Spritzgußverfahren deutlich verbessert werden. Als weitere vorteilhafte Eigenschaften sind eine verringerte Schrumpfung; eine verbesserte Verarbeitbarkeit auf Extrudern allgemein und eine verminderte Trübung zu nennen. Bei der Blasformung konnte eine leichte Verarbeitbarkeit und insgesamt ein blasenstabilisierender Effekt beobachtet werden. In Brandtests, wie B1 und UL 94 konnte eine Verminderung der Tropfenbildung sogar bei sehr geringer Beladung mit dem Nanoclay-Füllstoff in Form des Pulver- oder Polymer-Masterbatches beobachtet werden.

Wenn eine den erfindungsgemäßen Pulver-Masterbatch in einer seiner Ausgestaltungen enthaltende Polymerzusammensetzung hergestellt werden soll, kann dies in einfacher Weise geschehen, wie beispielhaft in Hinblick auf eine flammgeschützte Polymerzusammensetzung erläutert.
Zunächst wird ein Nanoclay ausgewählt, pre-exfoliert und wahlweise bis zu einer gewünschten Teilchengröße fein vermahlen. Dadurch wird der pulverförmige Masterbatch erhalten, der zusätzlich noch mit einem Polymerpulver zu einer im wesentlichen homogenen Mischung verarbeitet werden kann. Um diesen mit dem flammhemmenden, vorzugsweise auch halogenfreien Füllstoff in das Polymer zur Bildung der flammgeschützten Polymerzusammensetzung einzubringen, sind zwei verschiedene Verfahrensweisen möglich. Zum einen kann der pulverförmige Masterbatch mit dem Füllstoff gemischt und anschließend mit dem Polymer zu der flammgeschützten Polymerzusammensetzung compoundiert werden. In einer zweiten Variante werden der pulverförmige Masterbatch und der Füllstoff voneinander getrennt zu dem Strom des geschmolzenen Polymers zudosiert, auf diese Weise dort eingebettet und so die flammgeschützte Polymerzusammensetzung gebildet.

Die Herstellung einer solchen flammgeschützten Polymerzusammensetzung ist ebenfalls auf der Basis eines Polymer-Masterbatches möglich. Dann wird das für die Polymerzusammensetzung gewünschte Polymer mit einem Polymer-Masterbatch gemäß einer seiner erfindungsgemäßen Ausgestaltungen in der Weise compoundiert, daß zunächst wieder das Nanoclay ausgewählt, pre-exfoliert und wahlweise bis zu einer gewünschten Teilchengröße fein vermahlen wird. Dadurch wird ein pulverförmiger Masterbatch erhalten, gegebenenfalls in homogener Mischung mit einem Polymerpulver. Der so erhaltene Pulver-Masterbatch wird mit einem Trägerpolymer, das auf das Polymerpulver abgestimmt ist oder dem verwendeten Polymerpulver entspricht, compoundiert, so daß auf diese Weise ein Polymer-Masterbatch gebildet und anschließend weiterverarbeitet wird zu der fertigen flammgeschützten Polymerzusammensetzung. Auch hier sind wieder zwei alternative Verfahrensweisen möglich. Bei der ersten Alternative wird der Polymer-Masterbatch mechanisch mit dem Polymer, in das er eingearbeitet werden soll, gemischt und anschließend mit dem flammhemmenden, vorzugsweise halogenfreien Füllstoff zu der fertigen flammgeschützten Polymerzusammensetzung compoundiert. Bei der zweiten Variante wird der Polymer-Masterbatch zusammen mit dem Polymer, das flammgeschützt werden soll, einem ersten Einlaß der Compoundiermaschine zugeführt und der flammhemmende Füllstoff wird zu einem späteren Zeitpunkt ("downstream") zu der aufgeschmolzenen Polymerzusammensetzung hinzugefügt oder im sogenannten "Slpit-feed"-Verfahren zudosiert, um so die fertige flammgeschützte Polymerzusammensetzung zu bilden.

Das in bezug auf den Pulver-Masterbatch wie den Polymer-Masterbatch geschilderte Verfahren läßt sich nicht nur zur Herstellung flammgeschützter Polymerzusammensetzungen verwenden, sondern ist grundsätzlich auch für weitere vielfältige Anwendungen des Pulver-Masterbatches und des Polymer-Masterbatches, z.B. bei der Compoundierung von Polyolefinen, nutzbar. Die hervorragenden Ergebnisse bei der Compoundierung sind darauf zurückzuführen, daß durch den Pulver-Masterbatch, der auch Ausgangspunkt für den Polymer-Masterbatch ist, das eingesetzte Nanoclay bereits so behandelt ist, daß die Exfolierung der Schichten des eingesetzten Nanoclays vorbereitet und gefördert wird, bevor der eigentliche Compoundierschritt erfolgt. Dadurch wird die Compoundierung effektiver, und es werden weniger Energie- und weniger Zeitaufwand erforderlich, um den Nanoclay in dem gewünschten Polymer zu exfolieren. Daraus ergibt sich ein sehr wesentlicher Vorteil der Compoundierung unter Einsatz der vorbereiteten Masterbatche, weil dadurch die Verweilzeit des Polymers verringert wird, die Wärmevorgeschichte des Polymers auf einem Minimum gehalten und damit dem thermischen Abbau vorgebeugt und entgegengewirkt wird. Im Gegenzug wird die Farbkraft und werden die mechanischen Eigenschaften der fertigen Polymerzusammensetzung, bzw. des Compounds, deutlich verbessert, der Durchsatz erhöht und somit die Kosten der Compoundierung spürbar verringert. Als weiterer wesentlicher Vorteil des Einsatzes eines der erfindungsgemäßen Masterbatche ist zusätzlich zu nennen, daß die Gesamtbeladung des Polymers oder der Polymerzusammensetzung mit dem Nanoclay verringert werden kann. Vorzugsweise sogar auf einen Anteil von 2 Gew.-% und besonders bevorzugt auf einen Anteil unter 1 Gew.-%, ohne z.B. beim Einsatz für die Herstellung eines Flammschutzmittels die flammhemmenden Eigenschaften zu beeinträchtigen. Verglichen damit ist bei einem herkömmlichen Beladen der Polymerzusammensetzung mit dem Nanoclay eine Gesamtbeladung zwischen 5 und 10 Gew.-% erforderlich.

Diese deutlichen Verbesserungen bei der Compoundierung selbst sowie in bezug auf das Eigenschaftsprofil der compoundierten Polymere oder Polymerzusammensetzungen können dadurch erklärt werden, daß die Vorbereitung der Nanoclays in Form des Masterbatch, die der Förderung der Exfolierung bereits vor der Compoundierung dient, dazu beiträgt, daß das Nanoclay besser mit dem Polymer und den ggf. zusätzlich verwendeten halogenfreien Füllstoffen und/oder Polymeren vermischt werden kann, als während des eigentlichen Compoundierschritts.

Es hat sich gezeigt, daß z.B. bei einem Polymer oder einer Polymerzusammensetzung auf der Basis von Polypropylen mit einer Gesamtfüllstoffbeladung von 65 Gew.-% nach der Compoundierung eine Reißdehnung von mehr als 200 % (entsprechend 2m/m) und vorzugsweise von 500 % (entsprechend 5m/m) oder mehr nachgewiesen werden konnte, verglichen mit 10 % (entsprechend 0,1m/m) ohne Einsatz der erfindungsgemäßen Masterbatche.

Die oben genannten Verfahren zur Herstellung der flammgeschützten Polymerzusammensetzung werden ergänzt durch nachgeschaltete Verarbeitungsschritte, wie Extrudieren der erhaltenen Polymerzusammensetzung, um dadurch Kabel oder Leitungen herzustellen. Es kann sich auch ein Spritzgußverfahren der Polymerzusammensetzung anschließen, ein Blasspritzen von Filmen, ein Rotationsschmelzen- oder gießen, um nur einige Verarbeitungsmöglichkeiten der erhaltenen Polymerzusammensetzung zu einem fertigen Produkt zu nennen.

Die unter Verwendung von Polymeren oder pulverförmigen Masterbatchen erhaltenen Polymere oder Polymerzusammensetzungen können in vorteilhafter Weise im Flammschutzbereich als Synergisten zur Krustenbildung und als Kompatibilisatoren, aber auch allgemein als Mittel zu vielfältiger Eigenschaftsverbesserung in Polymerzusammensetzungen und als sperrschichtbildende Mittel eingesetzt werden. Zu solchen Polymerzusammensetzungen, deren Eigenschaften spürbar verbessert werden können, zählen auch Elastomere und Duroplaste.

Im folgenden soll die Erfindung anhand von ausgewählten Beispielen näher erläutert werden.

### Beispiele

Die in den Beispielen und den Vergleichsbeispielen erhaltenen Polymerzusammensetzungen wurden den nachfolgend genannten Standarttests und - Messungen unterworfen:
Schmelzindex (MFI) nach DIN 53 735,
Zugfestigkeit nach DIN 53 455,
Reißdehnung nach DIN 53 455,
Schlagfestigkeitsprüfung (aₙ) nach DIN 53 453,
Brennverhalten nach dem UL-94 Test, Underwriter Laboratories Standard.
UTBD (untamped bulk density) bezeichnet das Schüttgewicht, unverdichtet, in kg/l.
Als Schnellmischer wurde jeweils ein Fabrikat der Fa. M.T.L, Typ 60/2500 eingesetzt.

### I. Herstellung eines Pulver-Masterbatch

### Beispiel 1:

In einem handelsüblichen Schnellmischer, der explosionsgeschützt sein muß, werden
- 100 kg: eines Nanoclays "Nanofil 15" der Firma Südchemie AG, Deutschland, bei 1360 UPM (Umdrehungen pro Minute) auf eine Temperatur von ca. 45°C aufgeheizt und bei dieser Temperatur
- 34 kg: einer Polymerfettsäure "Pripol 1004" der Fa. Unichema International, Emmerich, Deutschland, als Additiv über eine Zeitspanne von ca. 30 s zudosiert.
Bei der angegebenen Drehzahl wird der Reaktionsansatz bis zur Austragstemperatur von 100°C aufgeheizt und anschließend in einem Kühlmischer auf eine Endtemperatur von etwa 30°C abgekühlt.
- 40 kg: eines Polyolefinpulvers werden mit dem oben erhaltenen Reaktionsansatz homogen vermengt, um das Zusammenbacken z. B. bei Lagerung bei höherer Temperatur zu verhindern und in Sperrschichtsäcke abgepackt.

Der so erhaltene Pulver-Masterbatch ist ein freifließendes, nahezu staubfreies Pulver mit sehr guter Dosierbarkeit und weist eine UTBD von 0,65 kg/l auf. Aufgrund der sehr guten Dosierbarkeit ist dieser Pulver-Masterbatch für kontinuierliche Compoundieraggregate sehr geeignet. Anstelle des Polyolefinpulvers kann allgemein z.B. auch EVA-Pulver verwendet werden.

### Beispiel 2:

In einem handelsüblichen Schnellmischer, der explosionsgeschützt sein muß, werden
- 100 kg: eines Nanoclays "Nanofil 15" der Firma Südchemie AG, Deutschland bei 1360 UPM (Umdrehungen pro Minute) auf eine Temperatur von ca. 45 °C aufgeheizt und bei dieser Temperatur
- 24 kg: einer Polymerfettsäure "Lithsolvent KU und
- 4,4 kg: Polydiethylsiloxan "Lithsolvent PL", beides von der Fa. KeBo, Düsseldorf, Deutschland, in der angegebenen Reihenfolge als Additiv zudosiert.
Bei der angegebenen Drehzahl wird der Reaktionsansatz bis zur Austragstemperatur von 90°C aufgeheizt und anschließend in einem Kühlmischer auf eine Endtemperatur von etwa 30°C abgekühlt.
- 20 kg: eines Polyolefinpulvers werden mit dem oben erhaltenen Reaktionsansatz homogen vermengt, um das Zusammenbacken z. B. bei Lagerung bei höherer Temperatur zu verhindern und in Sperrschichtsäcke abgepackt.

Der so erhaltene Pulver-Masterbatch ist ein freifließendes, nahezu staubfreies Pulver mit sehr guter Dosierbarkeit und weist eine UTBD von 0,82 kg/l auf. Aufgrund der sehr guten Dosierbarkeit ist dieser Pulver-Masterbatch für kontinuierliche Compoundieraggregate sehr geeignet.

### Beispiel 2a:

In einem handelsüblichen Schnellmischer, der explosionsgeschützt sein muß, werden
- 100 kg: eines Nanoclays "Nanofil 5" der Firma Südchemie AG, Deutschland, bei 1360 UPM (Umdrehungen pro Minute) auf eine Temperatur von ca. 45°C aufgeheizt und bei dieser Temperatur
- 24 kg: einer Polymerfettsäure "Lithsolvent KU" und
- 4,4 kg: Polydiethylsiloxan "Lithsolvent PL", beides von der Fa. KeBo, Düsseldorf, Deutschland, in der angegebenen Reihenfolge als Additiv über eine Zeitspanne von ca. 30 s zudosiert.
Bei der angegebenen Drehzahl wird der Reaktionsansatz bis zur Austragstemperatur von 90°C aufgeheizt und anschließend in einem Kühlmischer auf eine Endtemperatur von etwa 30°C abgekühlt.

Der so erhaltene Pulver-Masterbatch ist ein freifließendes nahezu staubfreies Pulver mit sehr guter Dosierbarkeit und weist eine UTBD von 0,69 kg/l auf. Aufgrund der sehr guten Dosierbarkeit ist dieser Pulver-Masterbatch für kontinuierliche Compoundieraggregate sehr geeignet.

### Beispiel 3:

In einem handelsüblichen Schnellmischer, der explosionsgeschützt sein muß, werden
- 100 kg: eines Nanoclays "Nanofil 5" der Firma Südchemie AG, Deutschland bei 1360 UPM (Umdrehungen pro Minute) auf eine Temperatur von ca. 45°C aufgeheizt und bei dieser Temperatur
- 4,4 kg: Polydimethylsiloxan "Lithsolvent PK" und
- 24,4 kg: Polydecansäure "Lithsolvent STT", beides von der Fa. KeBo, Düsseldorf, Deutschland, in der angegebenen Reihenfolge als Additiv über eine Zeitspanne von ca. 30 s zudosiert.
Bei der angegebenen Drehzahl wird der Reaktionsansatz bis zur Austragstemperatur von 130°C aufgeheizt und anschließend in einem Kühlmischer auf eine Endtemperatur von etwa 30°C abgekühlt.

Der so erhaltene Pulver-Masterbatch ist ein freifließendes, nahezu staubfreies Pulver mit sehr guter Dosierbarkeit und weist eine UTBD von 0,65 kg/l auf. Aufgrund der sehr guten Dosierbarkeit ist dieser Pulver-Masterbatch für kontinuierliche Compoundieraggregate sehr geeignet.

### Beispiel 4:

In einem handelsüblichen Schnellmischer, der explosionsgeschützt sein muß, werden
- 100 kg: eines Nanoclays "Nanofil 948" der Firma Südchemie AG, Deutschland, bei 1360 UPM (Umdrehungen pro Minute) auf eine Temperatur von ca. 45°C aufgeheizt und bei dieser Temperatur
- 24,4 kg: einer Polymerfettsäure "Lithsovent KU" und
- 4,4 kg: Polydiethylpolysiloxan "Lithsovent PL", beides von der Fa. KeBo, Düsseldorf, Deutschland, in der angegebenen Reihenfolge als Additiv über eine Zeitspanne von ca. 30 s zudosiert.
Bei der angegebenen Drehzahl wird der Reaktionsansatz bis zur Austragstemperatur von 110°C aufgeheizt und anschließend in einem Kühlmischer auf eine Endtemperatur von etwa 30°C abgekühlt.
- 80 kg: eines Polyolefinpulvers werden mit dem oben erhaltenen Reaktionsansatz homogen vermengt, um das Zusammenbacken z. B. bei Lagerung bei höherer Temperatur zu verhindern und in Sperrschichtsäcke abgepackt.

Der so erhaltene Pulver-Masterbatch ist ein freifließendes, nahezu staubfreies Pulver mit sehr guter Dosierbarkeit und weist eine UTBD von 0,73 kg/l auf. Aufgrund der sehr guten Dosierbarkeit ist dieser Pulver-Masterbatch für kontinuierliche Compoundieraggregate sehr geeignet.

### Beispiel 5:

In einem handelsüblichen Schnellmischer, der explosionsgeschützt sein muß, werden
- 100 kg: eines Nanoclays "Nanofil 5" der Firma Südchemie AG, Deutschland, bei 1360 UPM (Umdrehungen pro Minute) auf eine Temperatur von ca. 45°C aufgeheizt und bei dieser Temperatur
- 24,4 kg: Polylaurinsäure "Lithsolvent KTB" und
- 4,4 kg: Polydimethylpolysiloxan "Lithsovent PK", beides von der Fa. KeBo, Düsseldorf, Deutschland, in der angegebenen Reihenfolge als Additiv über eine Zeitspanne von ca. 30 s zudosiert.
Bei der angegebenen Drehzahl wird der Reaktionsansatz bis zur Austragstemperatur von 85°C aufgeheizt und anschließend in einem Kühlmischer auf eine Endtemperatur von etwa 30°C abgekühlt.
- 40 kg: eines Polyolefinpulvers werden mit dem oben erhaltenen Reaktionsansatz homogen vermengt, um das Zusammenbacken z. B. bei Lagerung bei höherer Temperatur zu verhindern und in Sperrschichtsäcke abgepackt.

Der so erhaltene Pulver-Masterbatch ist ein freifließendes, nahezu staubfreies Pulver mit sehr guter Dosierbarkeit und weist eine UTBD von 0,67 kg/l auf. Aufgrund der sehr guten Dosierbarkeit ist dieser Pulver-Masterbatch für kontinuierliche Compoundieraggregate sehr geeignet.

### Beispiel 6:

In einem handelsüblichen Schnellmischer, der explosionsgeschützt sein muß, werden
- 100 kg: eines Nanoclays "Elementis EA 108" der Firma Elementis USA bei 1360 UPM (Umdrehungen pro Minute) auf eine Temperatur von ca. 45°C aufgeheizt und bei dieser Temperatur
- 24,4 kg: einer Polymerfettsäure "Lithsolvent KU" und
- 4,4 kg: Polydiethylpolysiloxan "Lithsolvent PL", beides von der Fa. KeBo, Düsseldorf, Deutschland, in der angegebenen Reihenfolge als Additiv über eine Zeitspanne von ca. 30 s zudosiert.
Bei der angegebenen Drehzahl wird der Reaktionsansatz bis zur Austragstemperatur von 100°C aufgeheizt und anschließend in einem Kühlmischer auf eine Endtemperatur von etwa 30°C abgekühlt.
- 80 kg: eines Polyolefinpulvers werden mit dem oben erhaltenen Reaktionsansatz homogen vermengt, um das Zusammenbacken z. B. bei Lagerung bei höherer Temperatur zu verhindern und in Sperrschichtsäcke abgepackt.

Der so erhaltene Pulver-Masterbatch ist ein freifließendes, nahezu staubfreies Pulver mit sehr guter Dosierbarkeit und weist eine UTBD von 0,81 kg/l auf. Aufgrund der sehr guten Dosierbarkeit ist dieser Pulver-Masterbatch für kontinuierliche Compoundieraggregate sehr geeignet.

### Beispiel 7:

In einem handelsüblichen Schnellmischer, der explosionsgeschützt sein muß, werden
- 100 kg: eines Nanoclays "SCP 30 B" der Firma Southern Clay Products, Gonzales, Texas, USA, bei 1360 UPM (Umdrehungen pro Minute) auf eine Temperatur von ca. 45°C aufgeheizt und bei dieser Temperatur
- 24,4 kg: einer Polymerfettsäure "Lithsolvent KU" und
- 4,4 kg: Polydiethylpolysiloxan "Lithsolvent PL", beides von der Fa. KeBo, Düsseldorf, Deutschland, in der angegebenen Reihenfolge als Additiv über eine Zeitspanne von ca. 30 s zudosiert.
Bei der angegebenen Drehzahl wird der Reaktionsansatz bis zur Austragstemperatur von 100°C aufgeheizt und anschließend in einem Kühlmischer auf eine Endtemperatur von etwa 30°C abgekühlt.
- 80 kg: eines Polyolefinpulvers werden mit dem oben erhaltenen Reaktionsansatz homogen vermengt, um das Zusammenbacken z. B. bei Lagerung bei höherer Temperatur zu verhindern und in Sperrschichtsäcke abgepackt.

Der so erhaltene Pulver-Masterbatch ist ein freifließendes nahezu staubfreies Pulver mit sehr guter Dosierbarkeit und weist eine UTBD von 0,61 kg/l auf. Aufgrund der sehr guten Dosierbarkeit ist dieser Pulver-Masterbatch für kontinuierliche Compoundieraggregate sehr geeignet.

### Beispiel 8:

In einem handelsüblichen Schnellmischer, der explosionsgeschützt sein muß, werden
- 100 kg: eines Nanoclays "Nanofil 5" der Firma Südchemie AG, Deutschland, bei 1360 UPM (Umdrehungen pro Minute) auf eine Temperatur von ca. 60°C aufgeheizt und bei dieser Temperatur
- 24,4 kg: Isostearyltitanat "Lithsolvent OF" und
- 4,4 kg: Polydiethylpolysiloxan "Lithsolvent PL", beides von der Fa. KeBo, Düsseldorf, Deutschland, in der angegebenen Reihenfolge als Additiv über eine Zeitspanne von ca. 30 s zudosiert.
Bei der angegebenen Drehzahl wird der Reaktionsansatz bis zur Austragstemperatur von 65°C aufgeheizt und anschließend in einem Kühlmischer auf eine Endtemperatur von etwa 30°C abgekühlt.

Der so erhaltene Pulver-Masterbatch ist ein freifließendes, nahezu staubfreies Pulver mit sehr guter Dosierbarkeit und weist eine UTBD von 0,56 kg/l auf. Aufgrund der sehr guten Dosierbarkeit ist dieser Pulver-Masterbatch für kontinuierliche Compoundieraggregate sehr geeignet.

### Beispiel 9:

In einem handelsüblichen Schnellmischer, der explosionsgeschützt sein muß, werden
- 100 kg: eines Nanoclays "Nanofil 15" der Firma Südchemie AG, Deutschland, bei 1360 UPM (Umdrehungen pro Minute) auf eine Temperatur von ca. 45°C aufgeheizt und bei dieser Temperatur
- 12,2 kg: Stearinsäure "Pristerene 4912" von der Fa. Unichema International, Emmerich, Deutschland, als Additiv über eine Zeitspanne von ca, 30 s zudosiert.
Bei der angegebenen Drehzahl wird der Reaktionsansatz bis zur Austragstemperatur von 78°C aufgeheizt und anschließend in einem Kühlmischer auf eine Endtemperatur von etwa 30°C abgekühlt.

Der so erhaltene Pulver-Masterbatch ist ein freifließendes, nahezu staubfreies Pulver mit sehr guter Dosierbarkeit und weist eine UTBD von 0,74 kg/l auf. Aufgrund der sehr guten Dosierbarkeit ist dieser Pulver-Masterbatch für kontinuierliche Compoundieraggregate sehr geeignet.

### Beispiel 10:

In einem handelsüblichen Schnellmischer, der explosionsgeschützt sein muß, werden
- 100 kg: eines Nanoclays "Nanofil 15" der Firma Südchemie AG, Deutschland, bei 1360 UPM (Umdrehungen pro Minute) auf eine Temperatur von ca. 45°C aufgeheizt und bei dieser Temperatur
- 14 kg: Palmitinsäure "Pristerene 4934" von der Fa. Unichema International, Emmerich, Deutschland, und
- 6 kg: einer Polymerfettsäure "Lithsolvent KU-A" von der Fa. KeBo, Düsseldorf, Deutschland, als Additiv in der angegebenen Reihenfolge, über eine Zeitspanne von ca. 30 s zudosiert.
Bei der angegebenen Drehzahl wird der Reaktionsansatz bis zur Austragstemperatur von 120°C aufgeheizt und anschließend in einem Kühlmischer auf eine Endtemperatur von etwa 30°C abgekühlt.
- 50 kg: eines Polyolefinpulvers werden mit dem oben erhaltenen Reaktionsansatz homogen vermengt, um das Zusammenbacken z. B. bei Lagerung bei höherer Temperatur zu verhindern und in Sperrschichtsäcke abgepackt.

Der so erhaltene Pulver-Masterbatch ist ein freifließendes, nahezu staubfreies Pulver mit sehr guter Dosierbarkeit und weist eine UTBD von 0,80 kg/l auf. Aufgrund der sehr guten Dosierbarkeit ist dieser Pulver-Masterbatch für kontinuierliche Compoundieraggregate sehr geeignet.

### Beispiel 11:

In einem handelsüblichen Schnellmischer, der explosionsgeschützt sein muß, werden
- 100 kg: eines Nanoclays "Nanofil 5" der Firma Südchemie AG, Deutschland bei 1360 UPM (Umdrehungen pro Minute) auf eine Temperatur von ca. 45°C aufgeheizt und bei dieser Temperatur
- 34 kg: eines Polymers "EPIKOTE 1004" der Firma Schell als Additiv über eine Zeitspanne von ca. 30 s zudosiert.
Bei der angegebenen Drehzahl wird der Reaktionsansatz bis zur Austragstemperatur von 120°C aufgeheizt und anschließend in einem Kühlmischer auf eine Endtemperatur von etwa 30°C abgekühlt.
- 50 kg: eines Polyolefinpulvers werden mit dem oben erhaltenen Reaktionsansatz homogen vermengt, um das Zusammenbacken z. B. bei Lagerung bei höherer Temperatur zu verhindern und in Sperrschichtsäcke abgepackt.

Der so erhaltene Pulver-Masterbatch ist ein freifließendes, nahezu staubfreies Pulver mit sehr guter Dosierbarkeit und weist eine UTBD von 0,63 kg/l auf. Aufgrund der sehr guten Dosierbarkeit ist dieser Pulver-Masterbatch für kontinuierliche Compoundieraggregate sehr geeignet.

### Beispiel 12:

In einem handelsüblichen Schnellmischer, der explosionsgeschützt sein muß, werden
- 100 kg: eines Nanoclays "Nanofil 15" der Firma Südchemie AG, Deutschland, bei 1360 UPM (Umdrehungen pro Minute) auf eine Temperatur von ca. 45°C aufgeheizt und bei dieser Temperatur
- 42 kg: Laurinsäure "Edenor C 12/98-100" der Fa. Henkel KG, Deutschland, als Additiv über eine Zeitspanne von ca. 30 s zudosiert.
Bei der angegebenen Drehzahl wird der Reaktionsansatz bis zur Austragstemperatur von 80°C aufgeheizt und anschließend in einem Kühlmischer auf eine Endtemperatur von etwa 30°C abgekühlt.

Der so erhaltene Pulver-Masterbatch ist ein freifließendes, nahezu staubfreies Pulver mit sehr guter Dosierbarkeit und weist eine UTBD von 0,49 kg/l auf. Aufgrund der sehr guten Dosierbarkeit ist dieser Pulver-Masterbatch für kontinuierliche Compoundieraggregate sehr geeignet.

### Beispiel 13:

In einem handelsüblichen Schnellmischer, der explosionsgeschützt sein muß, werden
- 100 kg: eines Nanoclays "Nanofil 5" der Firma Südchemie AG, Deutschland, bei 1360 UPM (Umdrehungen pro Minute) auf eine Temperatur von ca. 45°C aufgeheizt und bei dieser Temperatur
- 33 kg: eines flüssigen Elastomers "Trilene 66" der Firma Uniroyal, USA, im Mischer vorgelegt und anschließend auf 100°C bei der angegebenen Drehzahl aufgeheizt. Bei dieser Temperatur werden dann
- 7 kg: Isostearyltetratitanat "Lithsolvent OF" von der Fa. KeBo, Düsseldorf, Deutschland, über eine Zeitspanne von ca. 30 s zudosiert. Bei der angegebenen Drehzahl wird der Reaktionsansatz bis zur Austragstemperatur von 120°C aufgeheizt und anschließend in einem Kühlmischer auf eine Endtemperatur von etwa 30°C abgekühlt.
- 50 kg: eines Polyolefinpulvers werden mit dem oben erhaltenen Reaktionsansatz homogen vermengt, um das Zusammenbacken z. B. bei Lagerung bei höherer Temperatur zu verhindern und in Sperrschichtsäcke abgepackt.

Der so erhaltene Pulver-Masterbatch ist ein freifließendes, nahezu staubfreies Pulver mit sehr guter Dosierbarkeit und weist eine UTBD von 0,89 kg/l auf. Aufgrund der sehr guten Dosierbarkeit ist dieser Pulver-Masterbatch für kontinuierliche Compoundieraggregate sehr geeignet.

### Beispiel 14:

In einem handelsüblichen Schnellmischer der explosionsgeschützt sein muß, werden
- 100 kg: eines Nanoclays "Nanofil 32" der Firma Südchemie AG, Deutschland, bei 1360 UPM (Umdrehungen pro Minute) auf eine Temperatur von ca. 45°C aufgeheizt und bei dieser Temperatur
- 24,4 kg: Isostearyltetratitanat "Lithsolvent OF" und
- 4,4 kg: Polydiethylsiloxan "Lithsolvent PL", beides von der Fa. KeBo, Düsseldorf, Deutschland, als Additiv in der angegebenen Reihenfolge über eine Zeitspanne von ca. 30 s zudosiert.
Bei der angegebenen Drehzahl wird der Reaktionsansatz bis zur Austragstemperatur von 100°C aufgeheizt und anschließend in einem Kühlmischer auf eine Endtemperatur von etwa 30°C abgekühlt.
- 40 kg: eines Polyolefinpulvers werden mit dem oben erhaltenen Reaktionsansatz homogen vermengt, um das Zusammenbacken z. B. bei Lagerung bei höherer Temperatur zu verhindern und in Sperrschichtsäcke abgepackt.

Der so erhaltene Pulver-Masterbatch ist ein freifließendes, nahezu staubfreies Pulver mit sehr guter Dosierbarkeit und weist eine UTBD von 0,86 kg/l auf. Aufgrund der sehr guten Dosierbarkeit ist dieser Pulver-Masterbatch für kontinuierliche Compoundieraggregate sehr geeignet.

### II. Herstellung eines Polymer-Masterbatch

Zur Herstellung eines Polymer-Masterbatches kann prinzipiell jede in der Compoundierindustrie zur Herstellung von hochgefüllten Systemen verwendete Verarbeitungsmaschine, z.B. ein Doppelwalzwerk, Innenmischer, FCM, Einschneckenextruder, Doppelschneckenextruder, Buss Ko-Kneter oder eine vergleichbare Verarbeitungsmaschine, eingesetzt werden. Bei dem Einsatz eines Buss Ko-Kneters sollte dieser mindestens 11 L/D Verfahrenslänge aufweisen.

### Beispiel 15:

Der aus Beispiel 2 erhaltene Pulver-Masterbatch und das im Hinblick auf das gewünschte fertige Polymer oder die Polymerzusammensetzung ausgewählte Trägerpolymer werden einem Buss Ko-Kneter oder einer vergleichbaren geeigneten Verarbeitungsmaschine zugeführt.

Im Ausführungsbeispiel werden 60 Gew.-% des gemäß Beispiel 2 erhaltenen Pulver-Masterbatches und 40 Gew.-% des Trägerpolymers eingesetzt. Als Trägerpolymer wird für die Zwecke dieses Ausführungsbeispieles EVA eingesetzt, wie es unter der Bezeichnung "Escorene Ultra UL 00119" von Exxon-Mobil im Handel erhältlich ist.

Der Buss Ko-Kneter wird in seiner Zone 1 und 2 sowie in der Granulierschnecke (GS) auf ca. 135°C und die Düse auf ca. 145°C aufgeheizt und das Trägerpolymer in den Haupteinzug des Buss Ko-Kneters kontinuierlich dosiert. Die entsprechende Menge des ausgewählten Pulver-Masterbatches wird nach dem oben angegebenen Gewichtsverhältnis, z.B. mittels einer gravimetrischen Dosierwaage, in den Haupteinzug des Buss Ko-Kneters zugegeben. Im Verfahrensteil wird der Pulver-Masterbatch mit dem Trägerpolymer vermischt und der entstandene Polymer-Masterbatch anschließend zu einem Granulat verarbeitet, abgekühlt und abgefüllt.
Der Polymer-Masterbatch wird in Form von zylindrischem oder linsenförmigem Granulat erhalten.

### Beispiel 16:

Der Polymer-Masterbatch gemäß Beispiel 16 wird erhalten, wie in Beispiel 15 angegeben, wobei anstelle des Pulver-Masterbatches nach Beispiel 2 hier der nach Beispiel 2a erhaltene Pulver-Masterbatch eingesetzt wird.

### Beispiel 17:

Der Polymer-Masterbatch gemäß Beispiel 17 wird erhalten, wie in Beispiel 15 angegeben, wobei anstelle des Pulver-Masterbatches nach Beispiel 2 hier der nach Beispiel 3 erhaltene Pulver-Masterbatch eingesetzt wird.

### Beispiel 18:

Der Polymer-Masterbatch gemäß Beispiel 18 wird erhalten, wie in Beispiel 15 angegeben, wobei anstelle des Pulver-Masterbatches nach Beispiel 2 hier der nach Beispiel 8 erhaltene Pulver-Masterbatch eingesetzt wird.

### Beispiel 19:

Der aus Beispiel 2 erhaltene Pulver-Masterbatch und das im Hinblick auf das gewünschte fertige Polymer oder die Polymerzusammensetzung ausgewählte Trägerpolymer werden einem Buss Ko-Kneter oder einer vergleichbaren geeigneten Verarbeitungsmaschine zugeführt.

Im Ausführungsbeispiel werden 60 Gew.-% des gemäß Beispiel 2 erhaltenen Pulver-Masterbatches und 40 Gew.-% des Trägerpolymers eingesetzt. Als Trägerpolymer wird für die Zwecke dieses Ausführungsbeispieles ein EP-g-MAH eingesetzt, wie es unter der Bezeichnung "FUSABOND" von DuPont, USA, im Handel erhältlich ist.

Der Buss Ko-Kneter wird in seiner Zone 1 und 2 sowie in der GS auf ca. 165°C und die Düse auf ca. 170°C aufgeheizt und das Trägerpolymer in den Haupteinzug des Buss Ko-Kneters kontinuierlich dosiert. Die entsprechende Menge des ausgewählten Pulver-Masterbatches wird nach dem oben angegebenen Gewichtsverhältnis, z. B. mittels einer gravimetrischen Dosierwaage, in den Haupteinzug des Buss Ko-Kneters zugegeben. Im Verfahrensteil wird der Pulver-Masterbatch mit dem Trägerpolymer vermischt und der entstandene Polymer-Masterbatch anschließend zu einem Granulat verarbeitet, abgekühlt und abgefüllt.
Der Polymer-Masterbatch wird in Form von zylindrischem oder linsenförmigem Granulat erhalten.

### Beispiel 20:

Der aus Beispiel 2 erhaltene Pulver-Masterbatch und das im Hinblick auf das gewünschte fertige Polymer oder die Polymerzusammensetzung ausgewählte Trägerpolymer werden einem Buss Ko-Kneter oder einer vergleichbaren geeigneten Verarbeitungsmaschine zugeführt.

Im Ausführungsbeispiel werden 60 Gew.-% des gemäß Beispiel 2 erhaltenen Pulver-Masterbatches und 40 Gew.-% des Trägerpolymers eingesetzt. Als Trägerpolymer wird für die Zwecke dieses Ausführungsbeispieles ein PP-g-MAH eingesetzt, wie es unter der Bezeichnung "EXXELOR PO 1050" von Exxon-Mobil im Handel erhältlich ist.

Der Buss Ko-Kneter wird in seiner Zone 1 und 2 sowie in der GS auf ca. 165°C und die Düse auf ca. 175°C aufgeheizt und das Trägerpolymer in den Haupteinzug des Buss Ko-Kneters kontinuierlich dosiert. Die entsprechende Menge des ausgewählten Pulver-Masterbatches wird nach dem oben angegebenen Gewichtsverhältnis, z. B. mittels einer gravimetrischen Dosierwaage, in den Haupteinzug des Buss Ko-Kneters zugegeben. Im Verfahrensteil wird der Pulver-Masterbatch mit dem Trägerpolymer vermischt und der entstandene Polymer-Masterbatch anschließend zu einem Granulat verarbeitet, abgekühlt und abgefüllt.
Der Polymer-Masterbatch wird in Form von zylindrischem oder linsenförmigem Granulat erhalten.

### Beispiel 21:

Der aus Beispiel 8 erhaltene Pulver-Masterbatch und das im Hinblick auf das gewünschte fertige Polymer oder die Polymerzusammensetzung ausgewählte Trägerpolymer werden einem Buss Ko-Kneter oder einer vergleichbaren geeigneten Verarbeitungsmaschine zugeführt.

Im Ausführungsbeispiel werden 60 Gew.-% des gemäß Beispiel 2 erhaltenen Pulver-Masterbatches und 40 Gew.-% des Trägerpolymers eingesetzt. Als Trägerpolymer wird für die Zwecke dieses Ausführungsbeispieles EEA eingesetzt, wie es unter der Bezeichnung "Escor 5000" von Exxon-Mobil im Handel erhältlich ist.

Der Buss Ko-Kneter wird in seiner Zone 1 und 2 sowie in der GS auf ca. 125°C und die Düse auf ca. 135°C aufgeheizt und das Trägerpolymer in den Haupteinzug des Buss Ko-Kneters kontinuierlich dosiert. Die entsprechende Menge des ausgewählten Pulver-Masterbatches wird nach dem oben angegebenen Gewichtsverhältnis, z. B. mittels einer gravimetrischen Dosierwaage, in den Haupteinzug des Buss Ko-Kneters zugegeben. Im Verfahrensteil wird der Pulver-Masterbatch mit dem Trägerpolymer vermischt und der entstandene Polymer-Masterbatch anschließend zu einem Granulat verarbeitet, abgekühlt und abgefüllt.
Der Polymer-Masterbatch wird in Form von zylindrischem oder linsenförmigem Granulat erhalten.

### Beispiel 22:

Der aus Beispiel 3 erhaltene Pulver-Masterbatch und das im Hinblick auf das gewünschte fertige Polymer oder die Polymerzusammensetzung ausgewählte Trägerpolymer werden einem Buss Ko-Kneter oder einer vergleichbaren geeigneten Verarbeitungsmaschine zugeführt.

Im Ausführungsbeispiel werden 60 Gew.-% des gemäß Beispiel 3 erhaltenen Pulver-Masterbatches und 40 Gew.-% des Trägerpolymers eingesetzt. Als Trägerpolymer wird für die Zwecke dieses Ausführungsbeispieles ein Calcium-Ionomer eingesetzt, wie es unter der Bezeichnung "ACLYN AC 201 A" von Allied Signal, USA, im Handel erhältlich ist.

Der Buss Ko-Kneter wird in seiner Zone 1 und 2 sowie in der GS auf ca. 125°C und die Düse auf ca. 135°C aufgeheizt und das Trägerpolymer in den Haupteinzug des Buss Ko-Kneters kontinuierlich dosiert. Die entsprechende Menge des ausgewählten Pulver-Masterbatches wird nach dem oben angegebenen Gewichtsverhältnis, z. B. mittels einer gravimetrischen Dosierwaage, in den Haupteinzug des Buss Ko-Kneters zugegeben. Im Verfahrensteil wird der Pulver-Masterbatch mit dem Trägerpolymer vermischt und der entstandene Polymer-Masterbatch anschließend zu einem Granulat verarbeitet, abgekühlt und abgefüllt.
Der Polymer-Masterbatch wird in Form von zylindrischem oder linsenförmigem Granulat erhalten.

### Beispiel 23:

Der aus Beispiel 8 erhaltene Pulver-Masterbatch und das im Hinblick auf das gewünschte fertige Polymer oder die Polymerzusammensetzung ausgewählte Trägerpolymer werden einem Buss Ko-Kneter oder einer vergleichbaren geeigneten Verarbeitungsmaschine zugeführt.

Im Ausführungsbeispiel werden 60 Gew.-% des gemäß Beispiel 3 erhaltenen Pulver-Masterbatches und 40 Gew.-% des Trägerpolymers eingesetzt. Als Trägerpolymer wird für die Zwecke dieses Ausführungsbeispieles ein EAAZ Polymer eingesetzt, wie es unter der Bezeichnung "Iotek 7010" von Exxon-Mobile, USA, im Handel erhältlich ist.

Der Buss Ko-Kneter wird in seiner Zone 1 und 2 sowie in der GS auf ca. 110°C und die Düse auf ca. 125°C aufgeheizt und das Trägerpolymer in den Haupteinzug des Buss Ko-Kneters kontinuierlich dosiert. Die entsprechende Menge des ausgewählten Pulver-Masterbatches wird nach dem oben angegebenen Gewichtsverhältnis, z. B. mittels einer gravimetrischen Dosierwaage, in den Haupteinzug des Buss Ko-Kneters zugegeben. Im Verfahrensteil wird der Pulver-Masterbatch mit dem Trägerpölymer vermischt und der entstandene Polymer-Masterbatch anschließend zu einem Granulat verarbeitet, abgekühlt und abgefüllt.
Der Polymer-Masterbatch wird in Form von zylindrischem oder linsenförmigem Granulat erhalten.

### Beispiel 24:

Der aus Beispiel 3 erhaltene Pulver-Masterbatch und das im Hinblick auf das gewünschte fertige Polymer oder die Polymerzusammensetzung ausgewählte Trägerpolymer werden einem Buss Ko-Kneter oder einer vergleichbaren geeigneten Verarbeitungsmaschine zugeführt.

Im Ausführungsbeispiel werden 60 Gew.-% des gemäß Beispiel 3 erhaltenen Pulver-Masterbatches und 40 Gew.-% des Trägerpolymers eingesetzt. Als Trägerpolymer wird für die Zwecke dieses Ausführungsbeispieles ein mit Maleinsäureanhydrid (MAH) modifiziertes Polypropylen eingesetzt, wie es unter der Bezeichnung "EXXELOR PO 1015" von Exxon-Mobil, USA, im Handel erhältlich ist, und das mit 10 Gew.-% Escorene Ultra 00328, ebenfalls von Exxon-Mobil, verschnitten worden ist.

Der Buss Ko-Kneter wird in seiner Zone 1 und 2 sowie in der GS auf ca. 185°C und die Düse auf ca. 200°C aufgeheizt und das Trägerpolymer in den Haupteinzug des Buss Ko-Kneters kontinuierlich dosiert. Die entsprechende Menge des ausgewählten Pulver-Masterbatches wird nach dem oben angegebenen Gewichtsverhältnis, z. B. mittels einer gravimetrischen Dosierwaage, in den Haupteinzug des Buss Ko-Kneters zugegeben. Im Verfahrensteil wird der Pulver-Masterbatch mit dem Trägerpolymer vermischt und der entstandene Polymer-Masterbatch anschließend zu einem Granulat verarbeitet, abgekühlt und abgefüllt.
Der Polymer-Masterbatch wird in Form von zylindrischem oder linsenförmigem Granulat erhalten.

### Beispiel 25:

Der aus Beispiel 5 erhaltene Pulver-Masterbatch und das im Hinblick auf das gewünschte fertige Polymer oder die Polymerzusammensetzung ausgewählte Trägerpolymer werden einem Buss Ko-Kneter oder einer vergleichbaren geeigneten Verarbeitungsmaschine zugeführt.

Im Ausführungsbeispiel werden 60 Gew.-% des gemäß Beispiel 3 erhaltenen Pulver-Masterbatches und 40 Gew.-% des Trägerpolymers eingesetzt. Als Trägerpolymer wird für die Zwecke dieses Ausführungsbeispieles Polycaprolactam eingesetzt, wie es unter der Bezeichnung "Grilamid 20 LM" von EMS-Chemie, Schweiz, im Handel erhältlich ist.

Der Buss Ko-Kneter wird in seiner Zone 1 und 2 sowie in der GS auf ca. 200°C und die Düse auf ca. 220°C aufgeheizt und das Trägerpolymer in den Haupteinzug des Buss Ko-Kneters kontinuierlich dosiert. Die entsprechende Menge des ausgewählten Pulver-Masterbatches wird nach dem oben angegebenen Gewichtsverhältnis, z. B. mittels einer gravimetrischen Dosierwaage, in den Haupteinzug des Buss Ko-Kneters zugegeben. Im Verfahrensteil wird der Pulver-Masterbatch mit dem Trägerpolymer vermischt und der entstandene Polymer-Masterbatch anschließend zu einem Granulat verarbeitet, abgekühlt und abgefüllt.
Der Polymer-Masterbatch wird in Form von zylindrischem oder linsenförmigem Granulat erhalten.

### III. Pulver- und Polymer-Masterbatch in ausgewählten Polymerzusammensetzungen

Alle prozentualen Angaben in den nachfolgenden Tabellen beziehen sich auf Gewichtsprozent, soweit nichts anderes angegeben.

In den Tabellen werden folgende Abkürzungen verwendet:
ATH = Aluminiumtrihydrat der allgemeinen Formel Al₂O₃ x 3 H₂O
PU-MB = Pulver-Masterbatch
PO-MB = Polymer-Masterbatch

**Tabelle 1:**

| Beispiel | P1 | P2 | P3 | P4 |
|---|---|---|---|---|
| | [%] | [%] | [%] | [%] |
| Escorene Ultra 00119 | 40 | 40 | 40 | 40 |
| ATH 4 m²/g | 54 | 54 | 54 | 54 |
| PU-MB von Bsp. 3 | 6 | | | |
| PU-MB von Bsp. 6 | | 6 | | |
| PU-MB von Bsp. 7 | | | 6 | |
| PU-MB von Bsp. 9 | | | | 6 |
| | | | | |
| Schmelzindex g/10 Min 190/10. | 7 | 3 | 2 | 3,2 |
| Zugfestigkeit N/mm² | 10,5 | 9,5 | 11 | 8,2 |
| Reißdehnung m/m | 6,2 | 4,2 | 2,4 | 6,6 |

Die nach Tabelle 1 erhaltenen Ergebnisse zeigen im Vergleich zu den in dem Vergleichsbeispiel nach Tabelle 3 erhaltenen Werten, daß bei Einsatz des erfindungsgemäßen Pulver-Masterbatches bei gleichbleibenden und z. T. sogar noch verbesserten Zugfestigkeiten eine wesentlich verbesserte Reißdehnung erhalten wurde, bei zumindest gleichbleibend guten Brandschutzeigenschaften.

**Tabelle 2:**

| Beispiel . | P5 | P6 | P7 | P8 |
|---|---|---|---|---|
| | [%] | [%] | [%] | [%] |
| Escorene Ultra 00119 | 36 | 36 | 36 | 36 |
| ATH 4m²/g | 54 | 54 | 54 | 54 |
| PO-MB von Bsp. 23 | 10 | | | |
| PO-MB von Bsp. 17 | | 10 | | |
| PO-MB von Bsp. 19 | | | 10 | |
| PO-MB von Bsp. 18 | | | | 10 |
| | | | | |
| Schmelzindex g/10 Min 190/10 | 5 | 7 | 4 | 6 |
| Zugfestigkeit N/mm² | 8 | 10 | 11 | 9,4 |
| Reißdehnung m/m | 6,1 | 4,5 | 3,6 | 7 |

In Tabelle 2 sind unter Einsatz von erfindungsgemäßen Polymer-Masterbatchen erhaltene Ergebnisse angegeben. Dabei zeigen sich im Vergleich zu den in Tabelle 1 bei Einsatz von Pulver-Masterbatchen erhaltenen Reißdehnungen mit einer Ausnahme noch einmal verbesserte Werte.
Im Hinblick auf den Vergleich zu den nach Tabelle 3 erhaltenen Werten gilt prinzipiell dasselbe, wie zu Tabelle 1 bereits ausgeführt.

**Tabelle 3:**

| Vergleichsbeispiel | V1 | V2 | V3 | V4 |
|---|---|---|---|---|
| | [%] | [%] | [%] | [%] |
| Escorene Ultra 00119 | 40 | 40 | 40 | 40 |
| ATH 4m²/g | 60 | | 54 | 54 |
| Mg(OH)₂-FR20 | | 60 | | |
| Nanofil 15 | | | 6 | |
| Nanofil 5 | | | | 6 |
| | | | | |
| Schmelzindex g/10 Min 190/10 | 1 | 1 | 1,5 | 0,75 |
| Zugfestigkeit N/mm² | 9,7 | 10,8 | 10 | 9.3 |
| Reißdehnung m/m | 1,4 | 1,2 | 1,5 | 4 |

Bei dem hier verwendeten Magnesiumhydroxid stellt FR 20 die Typenbezeichnung des Herstellers, der Fa. Dead Sea Bromine, Israel, dar.
Die im Vergleichsbeispiel erhaltenen Werte für den Schmelzindex und die Reißdehnung bewegen sich in bezug auf die Verarbeitbarkeit bereits im Grenzbereich. Für die Reißdehnung befinden sich die gemäß V1, V2 und V4 erhaltenen Werte unterhalb einer Norm, die bei 1,5 liegt.

**Tabelle 4:**

| Beispiel | P9 | P10 | P11 | P12 |
|---|---|---|---|---|
| | [%] | [%] | [%] | [%] |
| PP-Eltex KL 104 | 30 | 30 | 30 | 30 |
| Mg(OH)₂ FR 20 | 60 | 60 | 60 | 60 |
| PO-MB von Bsp. 16 | 10 | | | |
| PO-MB von Bsp. 18 | | 10 | | |
| PO-MB von Bsp. 19 | | | 10 | |
| PO-MB von Bsp. 23 | | | | 10 |
| | | | | |
| Schmelzindex g/10 Min 230/5 | 5,7 | 8,0 | 6,3 | 12 |
| Zugfestigkeit N/mm² | 13,8 | 16 | 14,5 | 11 |
| Reißdehnung m/m | 1,8 | 1,9 | 2,4 | 3,1 |
| Schlagfestigkeit | 50 | o. Br. (60) | o.Br.(58) | o. Br. (40) |

Die in bezug auf die Schlagfestigkeit in Klammern angegebenen Werte bedeuten die Schlagarbeit, welche jeweils dann bestimmt werden konnte, wenn das Material keinen Bruch (o. Br.) zeigte.
Lediglich für Beispiel P9 wurde Materialbruch festgestellt. Allerdings wurde dennoch ein guter Wert für die Schlagfestigkeit erzielt, der weit über den Werten der Vergleichsbeipiele gemäß Tabelle 5 liegt und noch eine gute Verarbeitbarkeit, auch im Gehäusebau, gewährleistet.

**Tabelle 5:**

| Vergleichsbeispiel | V5 | V6 | V7 | V8 |
|---|---|---|---|---|
| | [%] | [%] | [%] | [%] |
| PP-Eltex KL 104 | 35 | 35 | 35 | 35 |
| Mg(OH)₂FR20 | 65 | 59 | 59 | 59 |
| Nanofil 948 | | 6 | | |
| Elementis EA 108 | | | 6 | |
| Cloisite 30 B | | | | 6 |
| | | | | |
| Schmelzindex g/10 Min 230/5 | 0,1 | 1,0 | 1,0 | 1,0 |
| Zugfestigkeit N/mm² | 15 | 13 | 14 | 13,5 |
| Reißdehnung m/m | 0,01 | 0,09 | 0,1 | 0,08 |
| Schlagfestigkeit | 8 | 10 | 12 | 9 |

Die bei diesen Vergleichsbeispielen erzielte Schlagfestigkeit liegt weit unterhalb der z. B. im Gehäusebau erforderlichen Werte. Eine Schlagfestigkeit von 8, wie sie für Vergleichbeispiel V5 ermittelt wurde, bedeutet ein sehr sprödes, hartes Material und ist für den Gehäusebau ungeeignet. Hier sind Schlagfestigkeiten von zumindest 30 erforderlich.
Da alle Materialien gemäß der Vergleichsbeispiele V5 bis V8 Materialbruch zeigten, waren hier auch keine Schlagarbeit anzugeben.

**Tabelle 6:**

| Beispiel | P13 | P14 | P15 | P16 |
|---|---|---|---|---|
| | [%] | [%] | [%] | [%] |
| PA6 - Ultramid B3L | 45 | 45 | 45 | 45 |
| Mg(OH)₂ FR 20 | 45 | 45 | 45 | 45 |
| PO-MB von Bsp. 22 | 10 | | | |
| PO-MB von Bsp. 24 | | 10 | | |
| PO-MB von Bsp. 25 | | | 10 | |
| PO-MB von Bsp. 20 | | | | 10 |
| | | | | |
| Schmelzindex g/10 Min 275/10 | | | | |
| Zugfestigkeit N/mm² | 37 | 43 | 46 | 50 |
| Reißdehnung m/m | 0,02 | 0,08 | 0,05 | 0,08 |
| Schlagfestigkeit | 16 | 25 | 14 | 30 |

Bei technischen Polyamiden, wie hier mit PA6-Ultramid B3L verwendet, ist als problematische Eigenschaft die Reißdehnung zu nennen. Sie liegt bei den technischen Polyamiden normalerweise nicht über 0,02, wie die Tabelle 7 mit den Vergleichsversuchen V9 - V12 anschaulich zeigt. Lediglich V10 zeigt einen um eine Größenordnung besseren Wert, weil dort zusätzlich AMEO eingesetzt worden ist. Die üblicherweise schlechten Werte in bezug auf die Reißdehnung äußern sich bei den herkömmlichen technischen Polyamiden in Sprödbruch.

**Tabelle 7:**

| Vergleichsbeispiel | V9 | V10 | V11 | V12 |
|---|---|---|---|---|
| | [%] | [%] | [%] | [%] |
| PA6 - Ultramid B3L | 45 | 45 | 45 | 45 |
| Mg(OH)₂FR20 | 55 | | 49 | 49 |
| FR 20 (+1 % AMEO) | | 55 | | |
| Cloisite 25 A | | | 6 | |
| Cloisite 30 B | | | | 6 |
| | | | | |
| Schmelzindex g/10 Min 275/10 | | | | |
| Zugfestigkeit N/mm² | 50 | 60 | 35 | 40 |
| Reißdehnung m/m | 0,02 | 0,03 | 0,01 | 0,01 |
| Schlagfestigkeit | 20 | 32 | 13 | 12 |

Wie aus den Bemerkungen zu Tabelle 6 bereits hervorgeht, ist für das Eigenschaftsprofil dieser technischen Polyamide, wie hier für die Polymerzusammensetzung verwendet, die Reißdehnung von herausragender Bedeutung. Dabei zeigt sich, daß mit Ausnahme von P13 jede der erfindungsgemäß hergestellten Polymerzusammensetzungen eine Reißdehnung aufweist, die um zumindest drei Grö-ßenordnungen über den herkömmlich im Stand der Technik überhaupt erzielten Werten für die Reißdehnung liegt.

**Tabelle 8 mit polarem (Null-) Polymer:**

| Beispiel/ | V13 | P17 | P18 | P19 | P20 | V14 | P21 | P22 |
|---|---|---|---|---|---|---|---|---|
| Vergleichsbsp. | [%] | [%] | [%] | [%] | [%] | [%] | [%] | [%] |
| PE-EVA 00119 | 100 | 95 | 80 | 80 | 95 | 80 | 90 | 90 |
| Nanofil 5 | | 5 | | | | 20 | | |
| PU-MB 2 | | | 20 | | | | | |
| PU-MB 2a | | | | 20 | | | | |
| PU-MB 6 | | | | | 5 | | | |
| PU-MB 1 | | | | | | | 10 | |
| PU-MB 5 | | | | | | | | 10 |
| | | | | | | | | |
| Schmelzindex g/10 Min 190/10 | 6 | 12 | 16 | 15 | 14 | 6 | 15 | 17 |
| Zugfestigkeit N/mm² | 26 | 22 | 20 | 29 | 15 | 13 | 23 | 25 |
| Reißdehnung m/m | 17 | 14 | 12 | 17 | 11 | 8,5 | 15 | 16 |

Die erfindungsgemäß mit polarem (Null-) Polymer hergestellten Polymerzusammensetzungen, die bis jetzt im Stand der Technik als nicht realisierbar galten, zeigen ein hervorragendes Eigenschaftsprofil. Als besonders vorteilhaft hat sich gezeigt, daß bei der Extrusion keine Bärte entstehen und daß sich das Material überhaupt sehr gut extrudieren läßt. Beim Formgießen wird die Schwindung geringer und die Oberfläche deutlich besser.

Außerdem sind die Versuche so angelegt, daß sie ein in der Fachwelt verbreitetes Vorurteil widerlegen, nach welchem sich das Eigenschaftsprofil der Polymerzusammensetzungen bzw. der Polymercompounds linear mit höherem Anteil an Füllstoff verbessern läßt.

Wie Tabelle 8 zeigt, weist das Versuchspaar P21- P22 das ausgewogenste Eigenschaftsprofil auf, mit hohen Meßwerten oder ausgewogenen Mittenwerten in bezug auf die untersuchten Eigenschaften.

**Tabelle 9 mit unpolarem (Null-) Polymer:**

| Beispiel/ | V15 | V16 | P23 | P24 | P25 | P26 | P27 |
|---|---|---|---|---|---|---|---|
| Vergleichsbsp. | [%] | [%] | [%] | [%] | [%] | [%] | [%] |
| Riblene FL 30 | 100 | 80 | 80 | 80 | 95 | 90 | 90 |
| Nanofil 5 | | 20 | | | | | |
| PU-MB von Bsp. 1 | | | 20 | | 5 | | |
| PU-MB von Bsp. 3 | | | | 20 | | | |
| PO-MB von Bsp. 17 | | | | | | 10 | |
| PO-MB von Bsp. 21 | | | | | | | 10 |
| | | | | | | | |
| Schmelzindex g/10 Min 190/10 | 4 | 20 | 45 | 46 | 42 | 47 | 40 |
| Zugfestigkeit N/mm² | 13,5 | 10 | 12 | 11 | 11,5 | 12,5 | 11,5 |
| Reißfestigkeit N/mm² | | | | | | | |
| Reißdehnung m/m | 9,0 | 0,2 | 1,3 | 1,1 | 6,2 | 3,6 | 2,5 |

Dieses Beispiel einer Polymerzusammensetzung bzw. eines Polymercompounds betrifft eine Folientype für die Blasfolienherstellung. Die in bezug auf Tabelle 8 bereits erwähnte Nichtlinearität der Polymer-Füllstoff-Masterbatch-Zusammensetzungen in Hinblick auf die prozentualen Anteile des Masterbatches, der grundsätzlich auch einen Füllstoff darstellt, zeigt sich auch hier deutlich. Mit Versuch P25 wurde ein sehr gutes Gesamtprofil der Eigenschaften mit ausgewogenen Meßergebnissen erzielt, das im Vergleich noch besser ist als z. B. bei den Versuchen P23, P24 mit 20 % Masterbatch.

Verglichen mit dem Vergleichsversuch V16 zeigen aber auch P23, P24 deutlich bessere Werte. Mit einer Reißdehnung von nur 0,2 ist bei dem Material gemäß dem genannten Vergleichsversuch die Folienstabilität nicht gewährleistet.

**Tabelle 10 mit unpolarem (Null-) Polymer:**

| Beispiel | V17 | V18 | P28 | P29 | P30 | P31 | P32 | P33 |
|---|---|---|---|---|---|---|---|---|
| | [%] | [%] | [%] | [%] | [%] | [%] | [%] | [%] |
| Eltex KL 104 | 100 | 95 | 95 | 95 | 95 | 80 | 90 | 90 |
| Nanofil 5 | | 5 | | | | | | |
| PU-MB, Bsp. 5 | | | 5 | | | 20 | | |
| PU-MB, Bsp. 8 | | | | 5 | | | | |
| PU-MB, Bsp.11 | | | | | 5 | | | |
| PO-MB, Bsp.18 | | | | | | | 10 | |
| PO-MB, Bsp.20 | | | | | | | | 10 |
| | | | | | | | | |
| Schmelzindex g/10 Min 190/10 | 2 | 18 | 25 | 25 | 22 | 33 | 30 | 28 |
| Zugfestigkeit N/mm² | 31 | 23 | 24 | 31,5 | 26 | 21 | 25 | 30 |
| Reißdehnung m/m | 16 | 10 | 12 | 15 | 14 | 1,0 | 3,5 | 2,0 |

In Tabelle 10 ist mit Eltex KL 104 ein Polypropylen angegeben, wie es für den Spritzguß und das Extrudieren verwendet wird. Das ausgewogenste Eigenschaftsprofil lässt sich auch mit den erfindungsgemäßen Polymerzusammensetzungen bzw. Polymercompounds mit Zusammensetzungen gemäß den Versuchen P28 - P30 erreichen. Die Nichtlinearität ist daher auch hier zu beobachten.

Mit P30 wird demgegenüber ein herausragender Wert für den Schmelzindex erreicht, während die Reißdehnung hier ungünstiger ausfällt. Diese ist allerdings für die genannte Verarbeitung nicht entscheidend. Die Reißdehnung wird bei Polypropylen grundsätzlich über die Extrusion selbst eingestellt.

Grundsätzlich läßt sich feststellen, daß die unter Verwendung von Pulver- oder Polymer-Masterbatchen hergestellte Polymere, Polymerzusammensetzungen bzw. Compounds wesentliche Vorteile gegenüber den im Stand der Technik bisher bekannten, nur mit Nanoclays als Füllstoffen hergestellten Polymeren, Polymerzusammentzungen bzw. Compounds aufweisen. Sie lassen sich besser verarbeiten, sind im wesentlichen staubfrei und zeigen ein relativ hohes Schüttgewicht (unverdichtet).

## Patentansprüche

1. Pulverförmiger Masterbatch, der ein Nanoclay aus einem organisch interkalierten quellfähigen anorganischen Schichtmaterial aufweist, das in einem trockenen Verfahren mit einem pre-exfolierenden Additiv oder einer Additivmischung oberflächenbeschichtet worden ist.

2. Pulverförmiger Masterbatch nach Anspruch 1, **dadurch gekennzeichnet, daß** das enthaltene Nanoclay eine mittlere Teilchengröße von 0,1 bis 1000 µm, bevorzugt 0,1 bis 100 µm, besonders bevorzugt von 1 bis 15 µm und ganz besonders bevorzugt von 2 bis 10 µm aufweist.

3. Pulverförmiger Masterbatch nach Anspruch 1 oder 2, **dadurch gekennzeichnet, dass** das enthaltene Nanoclay gemahlenes Nanoclay umfaßt.

4. Pulverförmiger Masterbatch nach einem der Ansprüche 1 bis 3, **dadurch gekennzeichnet, dass** das anorganische Schichtmaterial ausgewählt ist aus natürlichen oder synthetischen Schichtsilikaten.

5. Pulverförmiger Masterbatch nach einem der Ansprüche 1 bis 4, **dadurch gekennzeichnet, dass** das Additiv oder die Additivmischung ausgewählt ist aus der Gruppe der gesättigten oder ungesättigten Fettsäuren und ihrer Salze, der Fettsäurederivate, der Polymerfettsäuren, der Siloxanderivate, oder deren Mischungen.

6. Pulverförmiger Masterbatch nach Anspruch 5, **dadurch gekennzeichnet, dass** die Fettsäure oder Fettsäurederivate ausgewählt sind aus Fettsäuren mit 10 bis 30 Kohlenstoffatomen.

7. Pulverförmiger Masterbatch nach Anspruch 5 oder 6, **dadurch gekennzeichnet, dass** die Fettsäurederivate ausgewählt sind aus hydrogenierten Derivaten, Alkoholderivaten, Aminderivaten, oder deren Mischungen.

8. Pulverförmiger Masterbatch nach Anspruch 5 oder 6, **dadurch gekennzeichnet, dass** die ungesättigten Fettsäuren die mono- oder polyungesättigten Hydroxyfettsäuren umfassen.

9. Pulverförmiger Masterbatch nach Anspruch 5 oder 6, **dadurch gekennzeichnet, dass** die Fettsäurederivate ausgewählt sind aus der Gruppe der polymeren Fettsäuren, der Ketofettsäuren, der Fettsäurealkyloxazoline und Fettsäurealkylbisoxazoline, oder deren Mischungen.

10. Pulverförmiger Masterbatch nach Anspruch 5, **dadurch gekennzeichnet, dass** die Siloxanderivate ausgewählt sind aus der Gruppe bestehend aus Oligoalkylsiloxanen, Polydialkylsiloxanen, Polyalkylarylsiloxanen, Polydiarylsiloxanen, oder deren Mischungen.

11. Pulverförmiger Masterbatch nach Anspruch 10, **gekennzeichnet durch** mit zumindest einer reaktiven Gruppe funktionalisierte Siloxanderivate.

12. Pulverförmiger Masterbatch nach einem der Ansprüche 1 bis 4, **dadurch gekennzeichnet, dass** das Additiv oder die Additivmischung ausgewählt aus der Gruppe der Ethylen-Propylen-Copolymere (EPM), der Ethylen-Propylen-Terpolymere (EPDM), der thermoplastischen Elastomere, der Haftvermittler, der Vernetzungsmittel, oder deren Mischungen.

13. Pulverförmiger Masterbatch nach Anspruch 12, **gekennzeichnet durch** ein mittleres Molekulargewicht von EPM und/oder EPDM von weniger als 20.000.

14. Pulverförmiger Masterbatch nach Anspruch 12 oder 13, **gekennzeichnet durch** ein Verhältnis von Ethylen zu Propylen in EPM und/oder EPDM von 40 : 60 bis 60 : 40.

15. Pulverförmiger Masterbatch nach einem der vorhergehenden Ansprüche, **gekennzeichnet durch** eine im wesentlichen homogenen Mischung des pre-exfolierten Nanoclays mit einem Polymerpulver.

16. Verwendung des Pulver-Masterbatches nach einem der Ansprüche 1 bis 15 als Füllstoff in Polymeren oder Polymerzusammensetzungen.

17. Verwendung nach Anspruch 16, wobei der pulverförmige Masterbatch (Pulver-Masterbatch) zunächst mit einem Trägerpolymer compoundiert wird, um eine Polymer-Masterbatch zu erhalten.

18. Verwendung nach Anspruch 16 oder 17 in Kombination mit einem flammhemmenden Füllstoff.

19. Verwendung nach Anspruch 18, **dadurch gekennzeichnet, dass** der flammhemmende Füllstoffhalogenfrei ist.

20. Verwendung nach Anspruch 19, **dadurch gekennzeichnet, dass** der halogenfreie flammhemmende Füllstoff ausgewählt ist aus Aluminiumhydroxid, Aluminiumoxihydrat (Böhmit), Magnesiumhydroxid, Magnesiumoxid, Brucit, Magnesiumcarbonat, Hydromagnesit, Huntit, Bauxit, Calciumcarbonat, Talk, Glaspulver, Melaminisocyanuraten, deren Derivaten und Zubereitungen, Boraten, Stannaten und Hydroxystannaten, Phosphaten, oder deren Mischungen.

21. Verwendung nach Anspruch 16 oder 17 als Füllstoff in Polyolefinen und deren Mischungen, technischen Kunststoffen und deren Mischungen sowie Legierungen.

22. Verwendung nach einem der Ansprüche 16 bis 21 für Elastomere und Duroplaste.

23. Verwendung nach einem der Ansprüche 16 bis 22, **gekennzeichnet durch** einen Anteil des pre-exfolierten Nanoclays von 0,1 - 50 Gew.%, vorzugsweise 0,1-15 Gew.%, in dem fertigen Polymer oder der Polymerzusammensetzung.

## Claims

1. A powdery master batch which has a nanoclay consisting of an organically intercalated swellable inorganic layered material which has been surface-treated in a dry process with a pre-exfoliated additive or an additive mixture.

2. A powdery master batch according to Claim 1, **characterised in that** the nanoclay contained has an average particle size of 0.1 to 1,000 µm, preferably 0.1 to 100 µm, especially preferably from 1 to 15 µm and quite especially preferably from 2 to 10 µm.

3. A powdery master batch according to Claim 1 or 2, **characterised in that** the nanoclay contained comprises ground nanoclay.

4. A powdery masterbatch according to any one of Claims 1 to 3, **characterised in that** the inorganic layered material is chosen from natural or synthetic layered silicates.

5. A powdery master batch according to any one of Claims 1 to 4, **characterised in that** the additive or the additive mixture is chosen from the group of saturated or unsaturated fatty acids and their salts, fatty acid derivatives, polymer fatty acids, the siloxane derivatives or mixtures thereof.

6. A powdery master batch according to Claim 5, **characterised in that** the fatty acids or fatty acid derivatives are chosen from fatty acids with 10 to 30 carbon atoms.

7. A powdery master batch according to Claim 5 or 6, **characterised in that** the fatty acid derivatives are chosen from hydrogenated derivatives, alcohol derivatives, amine derivatives or mixtures thereof.

8. A powdery master batch according to Claim to 5 or 6, **characterised in that** the unsaturated fatty acids comprise mono or polyunsaturated hydroxy fatty acids.

9. A powdery master batch according to Claim 5 or 6, **characterised in that** the fatty acid derivatives are chosen from the group of polymer fatty acids, keto fatty acids, fatty acid alkyl oxazolines and fatty acid alkyl bisoxazolines or mixtures thereof.

10. A powdery master batch according to Claim 5, **characterised in that** the siloxane derivatives are chosen from the group comprising oligoalkyl siloxanes, polydialkyl siloxanes, polyalkyl aryl siloxanes, polydiaryl siloxanes or mixtures thereof.

11. A powdery master batch according to Claim 10, **characterised by** siloxane derivatives functionalised with at least one reactive group.

12. A powdery master batch according to any one of Claims 1 to 4, **characterised in that** the additive or the additive mixture is chosen from the group of the ethylene propylene copolymers (EPM), the ethylene propylene terpolymers (EPDM), the thermoplastic elastomers, adhesion promoters, cross-linking agents or mixtures thereof.

13. A powdery master batch according to Claim 12, **characterised by** an average molecular weight of EPM and/or EPDM of less than 20,000.

14. A powdery master batch according to Claim 12 or 13, **characterised by** a ratio of ethylene to propylene in EPM and/or EPDM of 40:60 to 60:40.

15. A powdery master batch according to any one of the preceding Claims, **characterised by** a substantially homogeneous mixture of the pre-exfoliated nanoclay with a polymer powder.

16. Use of the powdery master batch according to any one of Claims 1 to 15 as a filler in polymers or polymer compositions.

17. Use according to Claim 16, wherein the powdery master batch (powder master batch) is initially compounded with a carrier polymer so as to obtain a polymer master batch.

18. Use according to Claim 16 or 17 in combination with a flame-retarding filler.

19. Use according to Claim 18, **characterised in that** the flame-retarding filler is halide-free.

20. Use according to Claim 19, **characterised in that** the halide-free flame-retarding filler is chosen from aluminium hydroxide, aluminium hydrate (boehmite), magnesium hydroxide, magnesium oxide, brucite, magnesium carbonate, hydro-magnesite, huntite, bauxite, calcium carbonate, talcum, glass powder, melamine isocyanurates, derivatives and preparations thereof, borates, stannates and hydroxy stannates, phosphates or mixtures thereof.

21. Use according to Claim 16 or 17 as a filler in polyolefins and mixtures thereof, industrial plastics materials and mixtures thereof, and also alloys.

22. Use according to any one of Claims 16 to 21 for elastomers and thermosetting plastics.

23. Use according to any one of Claims 16 to 22, **characterised by** a proportion of the pre-exfoliated nanoclay of 0.1 to 50 % by weight, preferably 0.1 to 15 % by weight, in the finished polymer or the polymer composition.

## Revendications

1. Mélange-maître pulvérulent qui comprend une nanoargile constituée d'un matériau lamellaire inorganique gonflable à intercalation organique, qui a été revêtue en surface avec un additif pré-exfolié ou un mélange d'additifs dans un procédé à sec.

2. Mélange-maître pulvérulent selon la revendication 1, **caractérisé en ce que** la nanoargile obtenue présente une granulométrie moyenne de 0,1 à 1000 µm, de préférence de 0,1 à 100 µm, particulièrement préférentiellement de 1 à 15 µm et tout particulièrement préférentiellement de 2 à 10 µm.

3. Mélange-maître pulvérulent selon la revendication 1 ou 2, **caractérisé en ce que** la nanoargile contenue comprend une nanoargile broyée.

4. Mélange-maître pulvérulent selon l'une des revendications 1 à 3, **caractérisé en ce que** le matériau lamellaire inorganique est choisi parmi les silicates lamellaires naturels ou synthétiques.

5. Mélange-maître pulvérulent selon l'une des revendications 1 à 4, **caractérisé en ce que** l'additif ou le mélange d'additifs est choisi dans le groupe des acides gras saturés ou insaturés et leurs sels, des dérivés d'acides gras, des acides gras polymères, des dérivés de siloxane, ou leurs mélanges.

6. Mélange-maître pulvérulent selon la revendication 5, **caractérisé en ce que** les acides gras ou les dérivés d'acides gras sont choisis parmi les acides gras ayant de 10 à 30 atomes de carbone.

7. Mélange-maître pulvérulent selon la revendication 5 ou 6, **caractérisé en ce que** les dérivés d'acides gras sont choisis parmi les dérivés hydrogénés, les dérivés alcooliques, les dérivés aminés ou leurs mélanges.

8. Mélange-maître pulvérulent selon la revendication 5 ou 6, **caractérisé en ce que** les acides gras insaturés comprennent les hydroxyacides gras mono- ou polyinsaturés.

9. Mélange-maître pulvérulent selon la revendication 5 ou 6, **caractérisé en ce que** les dérivés d'acides gras sont choisis dans le groupe constitué des acides gras polymères, des cétoacides gras, des alkyloxazolines d'acides gras et les alkylbisoxazolines d'acides gras ou leurs mélanges.

10. Mélange-maître pulvérulent selon la revendication 5, **caractérisé en ce que** les dérivés de siloxane sont choisis dans le groupe constitué des oligoalkylsiloxanes, polydialkylsiloxanes, polyalkylarylsiloxanes, polydiarylsiloxanes ou leurs mélanges.

11. Mélange-maître pulvérulent selon la revendication 10, **caractérisé par** des dérivés de siloxane fonctionnalisés avec au moins un groupe réactif.

12. Mélange-maître pulvérulent selon l'une des revendications 1 à 4, **caractérisé en ce que** l'additif ou le mélange d'additifs est choisi dans le groupe des copolymères d'éthylène - propylène (EPM), des terpolymères d'éthylène - propylène (EPDM), des élastomères thermoplastiques, des agents d'adhérence, des agents de réticulation, ou leurs mélanges.

13. Mélange-maître pulvérulent selon la revendication 12, **caractérisé par** un poids moléculaire moyen de EPM et/ou EPDM de moins de 20 000.

14. Mélange-maître pulvérulent selon la revendication 12 ou 13, **caractérisé par** un rapport entre éthylène et propylène dans EPM et/ou EPDM de 40/60 à 60/40.

15. Mélange-maître pulvérulent selon l'une des revendications précédentes, **caractérisé par** un mélange sensiblement homogène de nanoargile pré-exfoliée avec une poudre polymère.

16. Utilisation du mélange-maître pulvérulent selon l'une des revendications 1 à 15 en tant que charge dans des polymères ou des compositions polymères.

17. Utilisation selon la revendication 16, dans laquelle le mélange-maître pulvérulent (mélange-maître en poudre) est d'abord compoundé avec un polymère support pour obtenir un mélange-maître polymère.

18. Utilisation selon la revendication 16 ou 17 en combinaison avec une charge ignifuge.

19. Utilisation selon la revendication 18, **caractérisée en ce que** la charge ignifuge est exempte d'halogène.

20. Utilisation selon la revendication 19, **caractérisée en ce que** la charge ignifuge exempte d'halogène est choisie parmi l'hydroxyde d'aluminium, l'oxyhydrate d'aluminium (boehmite), l'hydroxyde de magnésium, l'oxyde de magnésium, la brucite, le carbonate de magnésium, l'hydromagnésite, la huntite, la bauxite, le carbonate de calcium, le talc, la poudre de verre, les isocyanurates de mélamine, leurs dérivés et préparations, les borates, les stannates et hydroxystannates, les phosphates ou leurs mélanges.

21. Utilisation selon la revendication 16 ou 17 comme charge dans des polyoléfines ou leurs mélanges, dans des matières plastiques techniques et leurs mélanges ainsi que dans des alliages.

22. Utilisation selon l'une des revendications 16 à 21 pour les élastomères et duroplastiques.

23. Utilisation selon l'une des revendications 16 à 22, **caractérisée par** une proportion de nanoargile pré-exfoliée de 0,1 à 50 % en poids, de préférence de 0,1 à 15 % en poids, dans le polymère fini ou la composition polymère.
